# EUROPEAN PATENT APPLICATION

(11) **EP 4 734 589 A1**
(43) Date of publication of application: **29.04.2026**
(21) Application number: 23942693.5
(22) Date of filing: 25.06.2023
(51) Int. Cl.: H04W 24/02, H04W 4/70

(54) **COMMUNICATION METHOD, DEVICES, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/102235
(87) International publication number: WO 2025/000162

(57) **Abstract**

Embodiments of the present disclosure provide a communication method, devices, a communication device, a communication system, and a storage medium. The method comprises: a third device sending a first signal, wherein the first signal is at least used for triggering a first device to send first information; receiving the first information sent by the first device on the basis of the first signal; and sending the first information.

## Description

### TECHNICAL FIELD

The present disclosure relates to the field of communication technologies, and in particular, to a communication method and device, a communication device, a communication system, and a storage medium.

### BACKGROUND

An Internet of Things (IoT) device is generally a device with low power consumption, and therefore, the IoT device may also maintain work for a long time based on its own battery. However, the service life of the battery is limited. Once the service life of the battery is exhausted, the IoT device may stop working, thus affecting the user experience.

### SUMMARY

According to embodiments of the present disclosure, there is provided a communication method and device, a communication device, and a storage medium.

According to a first aspect of the embodiments of the present disclosure, there is provided a communication method, where the method includes:
sending, by a third device, a first signal, where the first signal is at least used to trigger a first device to send first information;
receiving the first information sent by the first device based on the first signal; and
sending the first information.

According to a second aspect of the embodiments of the present disclosure, there is provided a communication method, where the method includes:
receiving fourth information from a second device, where the fourth information indicates that a third device is used as a reader of a first device; and
sending second information to the third device, where the second information indicates at least that the third device is used as the reader of the first device, and the reader is configured to send a first signal to the first terminal and receive first information sent by the first device.

According to a third aspect of the embodiments of the present disclosure, there is provided a communication method, where the method includes:
sending fourth information to a core network device, where the fourth information includes second information, and the second information indicates at least a third device to send a first signal to a first device and receive first information sent by the first device.

According to a fourth aspect of the embodiments of the present disclosure, there is provided a communication method, where the method includes:
receiving a first signal sent by a third device; and
sending first information to the third device based on signal energy of the first signal.

According to a fifth aspect of the embodiments of the present disclosure, there is provided a communication method, including:
sending, by a third device, a first signal to a first device, where the first signal is at least used to trigger the first device to send first information;
receiving, by the first device, the first signal, and sending the first information to the third device based on signal energy of the first signal;
receiving, by the third device, the first information, and sending the first information to a core network device; and
receiving, by the core network device, the first information, and sending the first information to a second device.

According to a sixth aspect of the embodiments of the present disclosure, there is provided a third device, including:
a transceiver module, configured to: send a first signal, where the first signal is at least used to trigger a first device to send first information; receive the first information sent by the first device based on the first signal; and, send the first information.

According to a seventh aspect of the embodiments of the present disclosure, there is provided a core network device, including:
a transceiver module, configured to: receive fourth information from a second device, where the fourth information indicates that a third device is used as a reader of a first device; and, send second information to the third device, where the second information indicates at least that the third device is used as the reader of the first device, and the reader is configured to send a first signal to the first terminal and receive first information sent by the first device.

According to an eighth aspect of the embodiments of the present disclosure, there is provided a second device, including:
a transceiver module, configured to send fourth information to a core network device, where the fourth information includes second information, and the second information indicates at least a third device to send a first signal to a first terminal and receive first information sent by the first device.

According to a ninth aspect of the embodiments of the present disclosure, there is provided a first device, including:
a transceiver module, configured to: receive a first signal sent by a third device; and, send first information to the third device based on signal energy of the first signal.

According to a tenth aspect of the embodiments of the present disclosure, there is provided a communication system, where the information indication system includes a third device, a core network device, a first device, and a second device, where the third device is configured to implement the method according to any one of the first aspect, the core network device is configured to implement the method according to the second aspect, the second device is configured to perform the method according to any one of the third aspect, and the first device is configured to perform the method according to any one of the fourth aspect.

According to an eleventh aspect of the embodiments of the present disclosure, there is provided a storage medium, where the storage medium stores an instruction, and when the instruction runs on a communication device, the communication device is caused to perform the communication method provided in the first aspect, the second aspect, the third aspect, the fourth aspect, or the fifth aspect.

According to the technical solution provided in the embodiments of the present disclosure, the third device may be used as an excitation device of the first device, so that the first information from the first device is sent to the network, thus implementing communication of the first information. In this way, the first device may be a passive device, thus reducing the problem of poor communication effect and poor user experience due to limited battery service life.

It should be understood that the above general description and the following detailed description are exemplary and explanatory only and are not intended to limit the embodiments of the present disclosure.

### BRIEF DESCRIPTION OF THE DRAWINGS

The accompanying drawings, which are incorporated in and constitute a part of this description, illustrate embodiments consistent with the present disclosure and, together with the description, serve to explain the principles of the embodiments of the present disclosure.
FIG. 1A is a schematic architectural diagram of a communication system according to an example embodiment;
FIG. 1B is a schematic diagram of wireless communication performed based on a backscatter transmission mechanism according to an example embodiment;
FIG. 1C is a schematic topology diagram of wireless communication performed by using a backscatter transmission mechanism according to an example embodiment;
FIG. 1D is a schematic diagram of wireless communication performed based on a backscatter transmission mechanism according to an example embodiment;
FIG. 1E is a schematic topology diagram of wireless communication performed by using a backscatter transmission mechanism according to an example embodiment;
FIG. 1F is a schematic topology diagram of wireless communication performed by using a backscatter transmission mechanism according to an example embodiment;
FIG. 1G is a schematic diagram of three devices for performing wireless communication by using a backscatter transmission mechanism according to an example embodiment;
FIG. 2 is a schematic flowchart of a communication method according to an example embodiment;
FIG. 3 is a schematic flowchart of a communication method according to an example embodiment;
FIG. 4 is a schematic flowchart of a communication method according to an example embodiment;
FIG. 5 is a schematic flowchart of a communication method according to an example embodiment;
FIG. 6 is a schematic flowchart of a communication method according to an example embodiment;
FIG. 7 is a schematic flowchart of a communication method according to an example embodiment;
FIG. 8 is a schematic flowchart of a communication method according to an example embodiment;
FIG. 9A is a schematic structural diagram of a third device according to an example embodiment;
FIG. 9B is a schematic structural diagram of a core network device according to an example embodiment;
FIG. 9C is a schematic structural diagram of a second device according to an example embodiment;
FIG. 9D is a schematic structural diagram of a first device according to an example embodiment;
FIG. 10A is a schematic structural diagram of UE according to an example embodiment;
FIG. 10B is a schematic structural diagram of a communication device according to an example embodiment.

### DETAILED DESCRIPTION

Embodiments of the present disclosure provide a communication method and apparatus, a communication device, a communication system, and a storage medium.

In a first aspect, according to embodiments of the present disclosure, there is provided a communication method, including:
sending, by a third device, a first signal, where the first signal is at least used to trigger a first device to send first information;
receiving first information sent by the first device based on the first signal; and
sending the first information.

In the foregoing embodiment, since the third device may trigger (i.e., excite), by using the first signal, the first device to send the first information of its own to the network, transmission of the first information from the first device without energy storage and/or with limited energy storage may be achieved. Therefore, transmission of the first information from the first device without energy storage and/or with limited energy storage may be achieved without adding other nodes, which has the characteristics of simple implementation and strong compatibility with related technologies.

In combination with some embodiments of the first aspect, in some embodiments, the method includes:
sending, by a third device, a first signal, where the first signal is at least used to trigger a first device to send first information;
receiving the first information sent by the first device based on the first signal; and
sending the first information.

In combination with some embodiments of the first aspect, in some embodiments, the third device may be, but is not limited to, a target access network device and a terminal device. The target access network device includes a base station.

In combination with some embodiments of the first aspect, in some embodiments, sending the first information includes:
sending the first information to the second device through a first channel between the third device and the second device;
   or,
sending the first information to the core network device through a second channel between the third device and the core network device, where the core network device is configured to send the first information to the second device through a third channel, and the third channel is a transmission channel between the core network device and the second device.

In the foregoing embodiment, the third device sends the first information to the second device through the first channel, or sends the first information to the second device by using the core network device as a forwarding node, thus achieving transmission of the first information to the second device, performing standardization on the transmission manner, and reducing the transmission exception caused by an unspecified transmission manner.

In combination with some embodiments of the first aspect, in some embodiments, second information sent by a core network device is received, where the second information indicates at least that the third device is used as a reader of the first device, and the reader is configured to send the first signal to the first device and receive the first information sent by the first device.

In the foregoing embodiment, the third device sends the first signal to the first device based on the second information sent by the core network device, thus achieving that the core network device performs the behavior standardization on the third device.

In combination with some embodiments of the first aspect, in some embodiments, the second information includes at least one of the following:
a task identification, where the task identification identifies a task to be executed by the first device;
task information, where the task information describes the task to be executed;
first indication information, indicating to send the first information to the second device using a first channel, or indicating to send the first information to the second device using a second channel and a third channel; or
address information, pointing to a second device.

In the foregoing embodiment, the second information includes one or more pieces of information, so that the transmission behavior between the target access network and the first device is standardized, thus reducing the problem of great network interference caused by non-standardized behavior between the third device and the first device, and improving the quality of the overall network environment.

In combination with some embodiments of the first aspect, in some embodiments, the task information includes at least one of the following:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of a first device, indicating the first device that sends the first information; or
a device group identification of the first device group, indicating a device group including a plurality of first devices that send the first information.

In combination with some embodiments of the first aspect, in some embodiments, the configuration information includes at least one of the following.
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

In the foregoing embodiment, by sending the task information, information interaction between the third device and the first device is standardized, so that the communication behavior between the third device and the first device is standardized, and the deterioration of the communication environment caused by non-standardized communication behavior is reduced.

In combination with some embodiments of the first aspect, in some embodiments, the area information includes a cell identification and/or a base station identification.

In the foregoing embodiment, the cell identification and the base station identification may help to determine the target core device and the first device that receives the first signal, to facilitate determining that which third device communicates with which first device, and which third device communicates with the core network device.

In combination with some embodiments of the first aspect, in some embodiments, the task information further includes at least one of the following:
a first correspondence between the task identification and a device identification of the first device;
a second correspondence between the first channel and a device identification of the first device;
a third correspondence between the task identification and the first channel; or
a fourth correspondence between the task identification and the second channel.

In the foregoing embodiment, if it is determined that obtaining of the second information used to determine the first time fails, or if it is determined that the second information used to determine the first time cannot be used, or if it is determined that the second information used to determine the first time cannot be identified, when the terminal is about to leave the signal coverage range, it will indicate to the first network element through the sixth information that the terminal is about to leave the signal coverage range, so that the first network element can know the situation that the terminal is about to leave the signal coverage range and can perform operations corresponding to the situation.

In combination with some embodiments of the first aspect, in some embodiments, sending the first signal includes:
sending, by the third device, the first signal carrying at least the task identification.

In the foregoing embodiment, the first signal carries the task identification, which facilitates the first device to subsequently return the first information carrying the task identification. In this way, after the first information carrying the task identification is returned to the network side, identification of the first information by each network device and/or the first device is facilitated.

In combination with some embodiments of the first aspect, in some embodiments, the first information carries the task identification.

In combination with some embodiments of the first aspect, in some embodiments, the first information includes a device identification of the first device.

In the foregoing embodiment, in some cases, the first information returned by the first device may not carry the task identification, but carry the device identification of the first device, or both carry the task identification and the device identification, to facilitate other devices to know which first device the first information comes from.

In combination with some embodiments of the first aspect, in some embodiments, the device identification includes a service code, where the service code indicates a service type involved in the first device.

In the foregoing embodiment, the device identification includes a service code. In a case that the first information carries the device identification, the current service type corresponding to the first information is known.

In combination with some embodiments of the first aspect, in some embodiments, the method further includes:
sending third information to a core network device, where the third information is used by the core network device to determine the third device used as a reader of the first device.

In the above embodiment, the target terminal sends the third information, so that the network device may select an appropriate reader for the first device, and the selected reader has the capability of being a reader and/or is authorized as a reader.

In combination with some embodiments of the first aspect, in some embodiments, the third information indicates at least one of the following:
whether the third device supports being used as a reader; or
whether the third device agrees or desires to be used as a reader.

In combination with some embodiments of the first aspect, in some embodiments, the method includes:
establishing a first channel with the second device based on the address information.

In the foregoing embodiment, the first information may be sent to the second device through the first channel, to implement direct communication between the third device and the second device.

In a second aspect, according to embodiments of the present disclosure, there is provided a communication method, including:
receiving fourth information from a second device, where the fourth information indicates that a third device is used as a reader of a first device; and
sending second information to the third device, where the second information indicates at least that the third device is used as the reader of the first device, and the reader is configured to send a first signal to the first terminal and receive the first information sent by the first device.

In the above embodiment,

In a third aspect, according to embodiments of the present disclosure, there is provided a communication method, where the method includes:
send fourth information to a core network device, where the fourth information includes second information, and the second information indicates at least the third device to send a first signal to a first device and receive first information sent by the first device.

In the foregoing embodiment, after receiving the third information, the terminal may determine, based on the first time included in the third information, an operation associated with the first time; or, after receiving the sixth information, the terminal may perform, based on the indication of the sixth information, an operation associated with that the terminal is about to leave the signal coverage range.

In a fourth aspect, according to embodiments of the present disclosure, there is provided a communication method, where the method includes:
receiving a first signal sent by a third device; and
sending first information to the third device based on signal energy of the first signal.

In a fifth aspect, according to embodiments of the present disclosure, there is provided a communication method, where the method includes:
sending, by a third device, a first signal to a first device, where the first signal is at least used to trigger the first device to send first information;
receiving, by the first device, the first signal, and sending the first information to the third device based on signal energy of the first signal;
receiving, by the third device, the first information, and sending the first information to a core network device; and
receiving, by the core network device, the first information, and sending the first information to a second device.

In a sixth aspect, according to embodiments of the present disclosure, there is provided a third device, including:
a transceiver module, configured to: send a first signal, where the first signal is at least used to trigger a first device to send first information; receive the first information sent by the first device based on the first signal; and, send the first information.

In a seventh aspect, according to embodiments of the present disclosure, there is provided a core network device, including:
a transceiver module, configured to: receive fourth information from a second device, where the fourth information indicates that a third device is used as a reader of a first device; and, send second information to the third device, where the second information indicates at least that the third device is used as a reader of the first device, and the reader is configured to send a first signal to the first terminal and receive the first information sent by the first device.

In an eighth aspect, according to embodiments of the present disclosure, there is provided a second device, including:
a transceiver module, configured to send fourth information to a core network device, where the fourth information includes second information, and the second information indicates at least a third device to send a first signal to a first terminal and receive first information sent by the first device.

In a ninth aspect, according to embodiments of the present disclosure, there is provided a first device, including:
a transceiver module, configured to: receive a first signal sent by a third device; and, send first information to the third device based on signal energy of the first signal.

In a tenth aspect, according to embodiments of the present disclosure, there is provided a communication system, where the information indication system includes a third device, a core network device, a first device, and a second device, where the third device is configured to implement the method according to any one of the first aspect, the core network device is configured to implement the method according to the second aspect, the second device is configured to perform the method according to any one of the third aspect, and the first device is configured to perform the method according to any one of the fourth aspect.

In an eleventh aspect, according to embodiments of the present disclosure, there is provided a communication device, where the communication device includes:
one or more processors;
where the processors are configured to invoke an instruction to cause the communication device to perform the communication method described in the optional implementation of the first aspect, the second aspect, the third aspect, the fourth aspect, or the fifth aspect.

In a twelfth aspect, according to embodiments of the present disclosure, there is provided a storage medium, where the storage medium stores an instruction, and when the instruction runs on a communication device, the communication device is caused to perform the communication method described in the optional implementation of the first aspect, the second aspect, the third aspect, the fourth aspect, or the fifth aspect.

In a thirteenth aspect, according to embodiments of the present disclosure, there is provided a program product, where when the program product is executed by a communication device, the communication device is caused to perform the communication method described in the optional implementation of the first aspect, the second aspect, the third aspect, the fourth aspect, or the fifth aspect.

In a fourteenth aspect, according to embodiments of the present disclosure, there is provided a computer program, where when the computer program runs on a computer, the computer is caused to perform the communication method described in the optional implementation of the first aspect, the second aspect, the third aspect, the fourth aspect, or the fifth aspect.

It may be understood that the third device, the core network device, the first device, the second device, the communication device, the communication system, the storage medium, the program product, and the computer program are all configured to perform the method provided in the embodiments of the present disclosure. Therefore, the beneficial effects that can be achieved can reference may be made to beneficial effects in the corresponding methods, and details are not described here again.

According to embodiments of the present disclosure, there is provided a communication method and device, a communication device, a communication system, and a storage medium. In some embodiments, terms such as a communication method, an information processing method and a communication method may be replaced with each other. Terms such as an information indication apparatus, an information processing apparatus and an information transmission apparatus may be replaced with each other. Terms such as a communication system and an information processing system may be replaced with each other.

The embodiments of the present disclosure are not exhaustive, and are merely illustrative of some embodiments, which are not intended to limit the scope of protection of the present disclosure. In the case of no contradiction, each step in an embodiment may be implemented as an independent embodiment, and the steps may be arbitrarily combined. For example, the solution after a partial step is removed in an embodiment may also be implemented as an independent embodiment, and the order of the steps in an embodiment may be exchanged arbitrarily. In addition, optional implementations in an embodiment may be arbitrarily combined. In addition, the various embodiments may be arbitrarily combined with each other. For example, some or all of the steps of different embodiments may be arbitrarily combined, and an embodiment may be arbitrarily combined with optional implementations of other embodiments.

In the embodiments of the present disclosure, if there is no special description and a logical conflict, terms and/or descriptions between the embodiments have consistency, and may be referred to each other. The technical features in different embodiments may be combined according to an internal logical relationship of the technical features to form a new embodiment.

Terms used in the embodiments of the present disclosure are only for the purpose of describing specific embodiments, and are not intended to limit the present disclosure.

In the embodiments of the present disclosure, unless otherwise specified, elements represented in the singular, such as "a", "an", "the", "the above-mentioned, "said", "the foregoing", "such a", or the like, may mean "one and only one", or may mean "one or more", "at least one", or the like. For example, in a case that articles such as "a", "an", "the" or the like in English are used in the translation, the noun after the article may be understood as a singular expression form, or may be understood as a plural form.

In the embodiments of the present disclosure, "a plurality of" means two or more.

In some embodiments, terms such as "at least one of", "one or more", "a plurality of, "multiple", or the like may be replaced with each other.

In some embodiments, recording manners such as "at least one of A or B", "A and/or B", "in a case A, in another case B", "one case A, another case B", etc., may include the following technical solutions according to the cases: in some embodiments A is performed (independently of B); in some embodiments B is performed (independently of A); in some embodiments it is selected to perform A or B (A and B is selectively performed); and, in some embodiments A and B are performed (both A and B are performed). When there are more branches, such as A, B and C, it is similar to the above description.

In some embodiments, the recording manner such as "A or B" or the like may include the following technical solutions: in some embodiments A is performed (independently of B); in some embodiments B is performed (independently of A); and, in some embodiments it is selected to perform A or B (A and B is selectively performed). When there are more branches, such as A, B and C, it is similar to the above description.

Prefix words such as "first" and "second" in the embodiments of the present disclosure are merely intended to distinguish different described objects, and do not constitute a limitation on the position, order, priority, quantity, or content of the described objects. For the statement of the described objects, reference may be made to the description of the context in the claims or embodiments, which should not constitute a redundant limitation due to the use of the prefix words. For example, if the described object is a "field", the ordinal terms before the "field" in the "first field" and the "second field" do not limit the position or order between the "fields", and "first" and "second" do not limit whether the "fields" defined by them are in the same message, nor do they limit the order of "the first field" and the "second field". For another example, if the described object is a "level", the ordinal terms before the "level" in the "first level" and the "second level" do not limit the priority between the "levels". For another example, the quantity of the described object is not limited by the ordinal term, which may be one or more. Taking "a first apparatus" as an example, the quantity of the "apparatus" may be one or more. In addition, objects defined by different prefix words may be the same or different. For example, if the described objects are "devices", "first device" and "second device" may be the same device or different devices, and the types of them may be the same or different. For another example, if the described object is "information", "first information" and "second information" may be the same information or different information, and the contents of them may be the same or different.

In some embodiments, "including A", "comprising A", "for indicating A" and "carrying A" may be interpreted as directly carrying A, or may be interpreted as an indirectly indicating A.

In some embodiments, terms such as "...", "it is determined...", "in the case of... ", "at the time...", "When", "if", "supposing that...", etc., may be replaced with each other.

In some embodiments, terms such as "greater than", "greater than or equal to", "not less than", "greater than", "greater than or equal to", "no less than", "higher than", "higher than or equal to", "not lower than", "above", or the like may be replaced with each other. Terms such as "smaller than", "smaller than or equal to", "not greater than", "less than", "less than or equal to", "not more than", "lower", "lower than or equal to", "not higher than", "below", or the like may be replaced with each other.

In some embodiments, an apparatus or the like may be interpreted as an entity, or may be interpreted as virtual, and its name is not limited to that recorded in the embodiments. Terms such as "apparatus", "equipment", "device", "circuit", "network element", "node", "function", "unit", "section", "system", "network", "chip", "chip system", "entity", "body" or the like in the embodiments may be replaced with each other.

In some embodiments, the "network" may be interpreted as an apparatus (for example, an access network device, a core network device, etc.) included in the network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" or the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, ort the like may be replaced with each other.

In some embodiments, the access network device, the core network device, or the network device may be replaced with a terminal. For example, for a structure in which communication between an access network device, a core network device, or a network device and a terminal is replaced with communication between a plurality of terminals (for example, device-to-device (D2D), vehicle-to-everything (V2X), or the like), embodiments of the present disclosure may also be applied. In this case, it may also be set as that the terminal has all or part of the functions of the access network device. In addition, terms such as "uplink" and "downlink" may also be replaced with terms corresponding to communication between terminals (for example, "side"). For example, an uplink channel, a downlink channel, or the like, may be replaced with a sidelink channel; and, an uplink, a downlink, or the like, may be replaced with a sidelink.

In some embodiments, the terminal may be replaced with an access network device, a core network device, or a network device. In this case, it may also be set as that an access network device, a core network device, has a structure corresponding to all or part of the functions of the terminal.

In some embodiments, obtaining data, information, etc. may conform to legal regulations in the country of the locus.

In some embodiments, data, information, etc. may be obtained after user consent is obtained.

In addition, each element, each row, or each column in the table of the embodiments of the present disclosure may be implemented as an independent embodiment; and any combination of any element, any row, or any column may also be implemented as an independent embodiment.

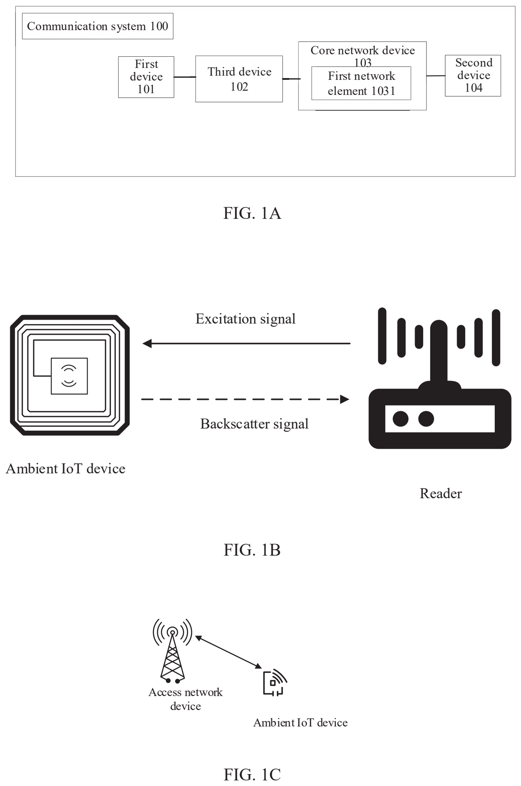

FIG. 1A is a schematic architectural diagram of a communication system according to an embodiment of the present disclosure.

As shown in FIG. 1A, the communication system 100 includes a first device 101, an access network device 102, a core network device 103 and a second device 104.

In some embodiments, the first device 101 includes at least one of, for example, a mobile phone, a wearable device, an Internet of Things device, a car having a communication function, an intelligent car, a tablet computer (Pad), a computer having a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home, but is not limited to this.

In some embodiments, the first device is also referred to as user equipment (UE).

In some embodiments, the access network device 102 may be for example, a node or a device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, or an access node in a Wi-Fi system, but is not limited to this.

In some embodiments, the technical solution of the present disclosure may be applied to an Open RAN architecture. In this case, an interface between access network devices or within an access network device in the embodiments of the present disclosure may become an internal interface of an Open RAN, and processes and information interactions between these internal interfaces may be implemented by software or a program.

In some embodiments, the access network device may be composed of a central unit (CU) and a distributed unit (DU), where the CU may also be referred to as a control unit. The structure that adopts CU-DU may split the protocol layers for the access network device. Functions of part protocol layers are centrally controlled in the CU, functions of the remaining part or all of the protocol layers are distributed in the DU, and the DU is centrally controlled by the CU, which is not limited to this.

In some embodiments, the core network device 103 may be a device including a first network element 1031, or may be a plurality of devices or a device group each of which includes a first network element 1031. The network element may be virtual, or may be an entity. The core network includes, for example, at least one of an evolved packet core (EPC), a 5G core network (5GCN), or a next generation core (NGC).

In some embodiments, the first network element 1031 is, for example, an access and mobility management function (AMF).

In some embodiments, the first network element 1031 is, for example, a mobility management entity (MME).

In some embodiments, the first network element 1031 is used for access and mobility management, such as registration management, connection management, mobility management, or the like, and the name is not limited to this.

In some embodiments, the first network element 1031 may be a network element independent of the core network device.

In some embodiments, the core network may further include a second network element, and the second network element may include user data management (UDM).

It may be understood that the communication system described in the embodiments of the present disclosure is intended to describe the technical solutions of the embodiments of the present disclosure more clearly, and does not constitute a limitation on the technical solutions provided in the embodiments of the present disclosure. Those of ordinary skill in the art may know that, with the evolution of the system architecture and the appearance of the new service scenario, the technical solutions provided in the embodiments of the present disclosure are also applicable to similar technical problems.

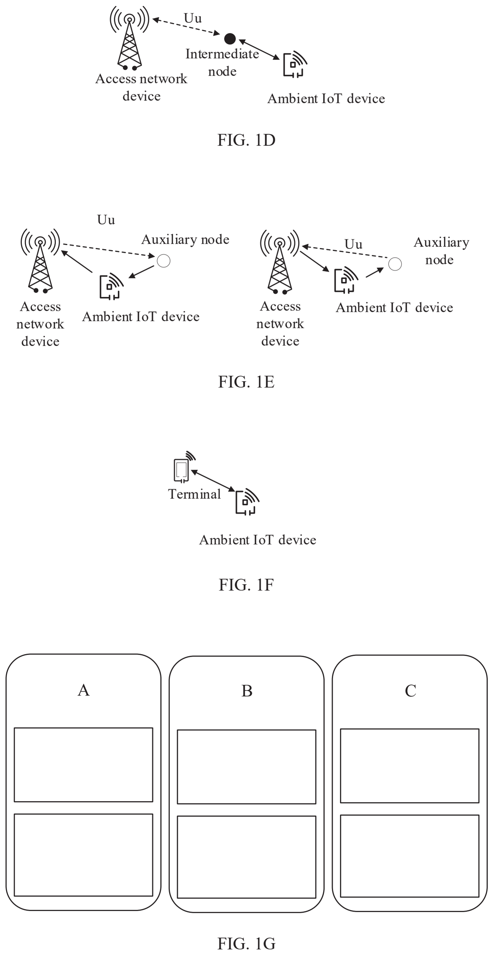

The following embodiments of the present disclosure may be applied to the communication system 100 shown in FIG. 1 A or some of the entities, which is not limited to this. The entity shown in FIG. 1 is an example. The communication system may include all or part of the entities in FIG. 1, or may include another entity other than FIG. 1. The quantity and the form of each entity are arbitrary, and the connection relationship between the entities is an example. The entities may not be connected or connected with each other, and the connection between them may be of any manner, which may be a direct connection or an indirect connection, or may be a wired connection or a wireless connection.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), New-Radio Access Technology (RAT), new radio (NR), new radio access (NX), future generation radio access (FX), Global System for Mobile communications (GSM, which is a registered trademark), CDMA2000, Ultra Mobile Broadband (UMB), IEEE 802.11 (Wi-Fi, which is a registered trademark), IEEE 802.16 (WiMAX, which is a registered trademark), IEEE 802.20, Ultra-Wideband (UWB), Bluetooth (a registered trademark), Public Land Mobile Network (PLMN) network, Device-to-Device (D2D) system, Machine to Machine (M2M) system, Internet of Things (IoT) system, Vehicle-to-Everything (V2X), system utilizing other communication methods, next generation systems extended based on them, etc. In addition, a combination of a plurality of systems (e.g., a combination of LTE or LTE-A and 5G, etc.) may also be applied.

In some cases, Internet of Things devices often have a negative impact on user experience due to being driven by traditional batteries with a limited service life. The number of Internet of Things network devices gradually presents astronomical growth, along with the appearance of a large number of Internet of Things devices, maintenance expenses including labor and battery costs are thus pushed to a completely new level. There are billions of conventional batteries that are discarded each year, and only a small portion can be effectively recovered, which causes deleterious effects on the Earth's ecosystem. Maintaining the operation of the Internet of Things network and replacement of the battery may be very challenging in some extreme environmental conditions. In this regard, no-battery Internet of Things communications have been proposed, which may improve network performance and sustainability, and extend application scenarios. In addition, no-battery communication is more environmentally friendly and safer for children and old people. By removing conventional batteries, device size and cost can be significantly reduced, thus providing basis for various new applications.

In some embodiments, various Low Power Wide Area (LPWA) technologies have been developed, such as Machine Type Communication (MTC), Narrow Band Internet of Things (NB-IoT), Reduced Capability (RedCap), or the like, to meet the increasing demand in the vertical field. These LPWA technologies implement low cost, low power consumption and large-scale connection, and can meet the requirements of many applications. However, there are still many use cases and applications in which the following cases cannot be addressed. First, battery-driven devices are not applicable, such as under extreme environmental conditions (e.g. high pressure, extremely high/low temperature, humid environments). Second, there is a need for maintenance-free devices (e.g. conventional batteries that do not require replacement of devices). Finally, there is a need for ultra-low complexity, very small device size/form factor (e.g. mm in thickness), longer service life cycle, etc. The Internet of Things supporting ambient power is a promising technology to meet the above-mentioned unmet needs. An Internet of Things device supporting ambient power is an Internet of Things device powered by energy harvesting, with no battery or with limited energy storage capability (e.g. by using capacitors), in which power is provided by collecting radio waves, light, motion, heat, or any other suitable power source.

The energy obtained from the environment can drive data transmission and wireless communication of the sensing node. The receiving and transmitting power consumption of the current mainstream low-power consumption Internet of Things communication chip (such as BLE, LoRa, NB-IoT) is in the level of several tens of milliwatts or even hundreds of milliwatts, while the energy obtained by ambient energy acquisition is only in the level of microwatts and cannot drive these types of nodes to work. Therefore, a brand-new wireless communication technology is required, so that the energy consumption of the communication drops below several tens of microwatts or even tens of microwatts. The current mainstream manner is to use the backscatter communication technology. Backscatter communication is one of key technologies to construct a green energy saving, low cost, and flexibly deployed future Internet of Things, and is an important means for implementing "Internet of Everything". Methods that may be employed include the backscatter communication technology.

The first device 104 as shown in FIG. 1A may be any device for wireless communication by using a backscatter transmission mechanism.

As shown in FIG. 1B, the backscatter transmission mechanism may be a wireless communication mechanism using a radio frequency signal backscatter principle and a very low power consumption modulation and transmission technology. The reader sends a physical layer signal to an ambient IoT device. The physical layer signals may be various alternating current signals such as pulse signals. In some embodiments, the physical layer signal is used to provide energy for an ambient IoT device to transmit a signal. Therefore, the physical layer signal may be referred to as an excitation signal or a trigger signal. For example, a part of the excitation signal may be reflected when reaching an ambient IoT device, and the ambient IoT device may adjust a match between the receiving antenna and the impedance based on the information to be sent, enhance reflection of the incident excitation signal, and modulate the sensing data obtained by itself onto the reflection signal, so as to complete sending of the data. This process is similar to a reflector. Compared with other communication technologies, the backscatter transmission does not require complex radio frequency structures, in which the use of devices such as power amplifiers, high-precision crystal oscillators, diplexers, high-precision filters, or the like is reduced, and does not require complex baseband processing. Therefore, the design of an ambient IoT device can be simplified, and the node cost of an ambient IoT device can be greatly reduced. An ambient IoT device is an IoT device that works using ambient energy. The ambient energy may include the signal energy of the foregoing wireless signal, or may include other ambient capabilities such as geothermal energy and/or light energy.

Here, a device that sends a physical layer signal to an ambient IoT device and triggers the ambient IoT device to return a reflection signal may be referred to as an anchor of a reader of an ambient IoT device.

It should be noted that an ambient IoT device is a device for wireless communication using the backscatter transmission mechanism. In a specific implementation, another device may perform wireless communication by using the backscatter transmission mechanism.

The anchor or reader of the ambient IoT device may be a network node of a wireless communication network, such as an access network device, a relay node (or an intermediate node), a terminal, or the like.

The network topology architecture for backscatter transmission may include one of the following.

Topology architecture 1. As shown in FIG. 1C, uplink (UL) and downlink (DL) data transmission is directly performed between an ambient IoT device and an access network device.

Topology architecture 2. As shown in FIG. 1D, DL and UL data transmission is indirectly performed between the ambient IoT device and the access network device. There is an intermediate node (or referred to as an auxiliary node) for forwarding in the middle. For example, the intermediate node may be a relay, an integrated access backhaul (IAB), user equipment (UE), a repeater (RP).

Topology architecture 3. As shown in FIG. 1E, data reception or transmission is performed directly in DL or UL between the ambient IoT device and the access network device. Then there is an auxiliary node in UL or DL, and the auxiliary node is responsible for receiving or sending UL data or receiving DL data. For example, the auxiliary node may be a relay, an integrated access backhaul (IAB) node, a terminal, and a network controlled repeater (NCR).

Topology architecture 4. As shown in FIG. 1F, data reception and transmission in DL and UL are directly performed between the ambient IoT device and the UE. The UE is responsible for collecting data and forwarding the collected data to the network side.

As shown in FIG. 1G, a device for performing wireless communication by using a backscatter transmission mechanism may be classified into three types.

Device A. The device A has no energy storage, cannot independently generate a signal and/or amplify a signal, and can only perform backscatter transmission.

Device B. The device B has energy storage, cannot independently generate a signal, and can only perform backscatter transmission. The use of stored energy may include amplification of backscatter signals.

Device C. The device C has energy storage, can independently generate a signal, that is, having an active radio frequency (RF) component for transmission.

In the embodiments of the present disclosure, considering that the number of terminals is large, thus considering the coverage range, the terminal may also be selected as the anchor or reader of the device for communication using the backscatter principle.

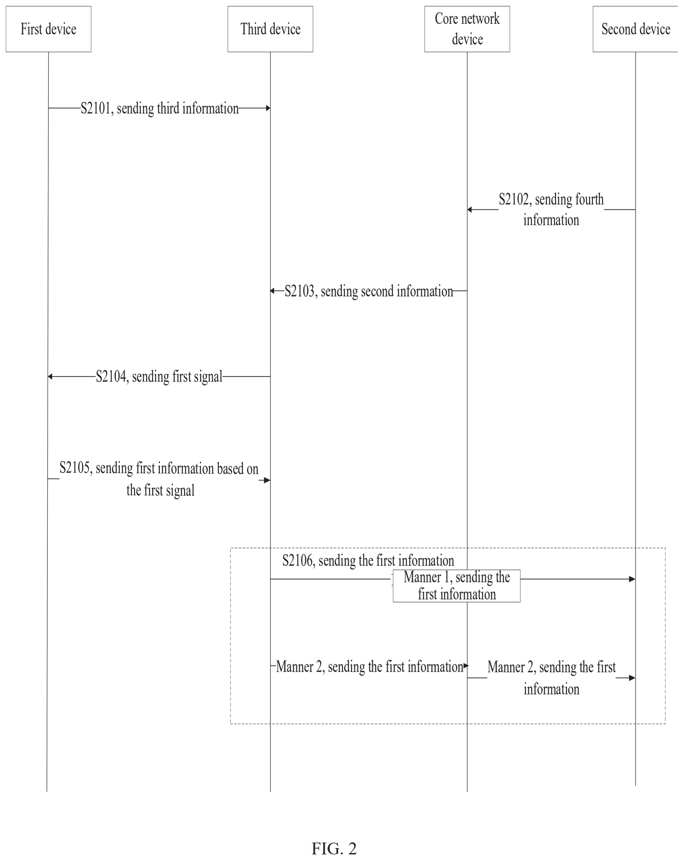

FIG. 2 is a schematic interaction diagram of a communication method according to an embodiment of the present disclosure. As shown in FIG. 2, the embodiment of the present disclosure relates to a communication method applied in a communication system 100, and the method includes the following.

In S2101, third information is sent.

In some embodiments, a third device sends the third information to a core network device.

In some embodiments, an access network device sends the third information to the core network device. The third device includes at least an access network device.

In some embodiments, the third information is used by the core network device to determine the third device that is used as the reader of a first device. The reader of the first device may send a first signal to the first device, and receive first information returned by the first device based on the first signal.

The reader may also be referred to as an anchor.

For example, the third information may be used by the core network device to select the reader of the first device, or the third information may be used by the second device to select the reader of the first device.

For another example, when the third information is transmitted to the second device, the third information may be used by the second device to select the reader of the first device. The second device may be a receiving end device for the first information read by the reader.

For example, the third information indicates at least one of the following:
whether the third device supports to be used as a reader; or
whether the third device agrees or desires to be used as a reader.

Among them, the reader is configured to send the first signal to the first device and receive the first information returned by the first device.

That is, in some examples, the third information may include capability information indicating whether the third device supports to be used as a reader.

In some embodiments, the third information may further include indication information indicating whether the third device agrees or is expected to be used as a reader.

In some cases, the third information from the third device may be pre-stored in the core network device through subscription information, or the like, so that the third device does not need to report the third information.

In some other cases, for example, the indication information is stored in the core network device in advance through subscription information, and the capability information needs to be reported by the third device. In some other embodiments, the third device reports one of the capability information and the indication information.

In some embodiments, the third information may further include one of the following:
time information, indicating a time at which the third device agrees or desires to be used as a reader;
spatial information, indicating a location area in which the third device agrees or desires to be used as a reader; or
state information, indicating a state of the third device in which the third device agrees or desires to be used as a reader. The state of the third device may be related to a load rate of the third device, whether the third device itself has service data to be sent, or the like.

For example, the time information may indicate that the third device may be used as a reader when its own service amount is generally less.

For another example, the state information may indicate that the third device may be used as a reader when itself has no service data for transmission.

By sending the third information, communication interference on the third device when the third device is used as the reader of the first device is reduced, thus ensuring the communication quality of the target access network itself.

In some embodiments, the third information indicates at least one of the following:
whether the fourth device supports to be used as a reader; or
whether the fourth device agrees or desires to be used as a reader.

Among them, the reader is configured to send the first signal to the first device and receive the first information returned by the first device. The fourth device includes the third device, and the third device is a part of devices in the fourth device.

That is, in some examples, the third information may include capability information indicating whether the fourth device supports to be used as a reader.

In some embodiments, the third information may further include indication information indicating whether the fourth device agrees or is expected to be used as a reader.

In some cases, the third information from the fourth device may be pre-stored in the core network device through subscription information, or the like, so that the fourth device does not need to report the third information.

In some other cases, for example, the indication information is stored in the core network device in advance through subscription information, and the capability information needs to be reported by the fourth device. In some other embodiments, the fourth device reports one of the capability information and the indication information.

In some embodiments, the third information may further include one of the following:
time information, indicating a time at which the fourth device agrees or desires to be used as a reader;
spatial information, indicating a location area in which the fourth device agrees or desires to be used as a reader; or
state information, indicating a state of the fourth device in which the fourth device agrees or desires to be used as a reader. The state of the fourth device may be related to a load rate of the fourth device, whether the fourth device itself has service data to be sent, or the like.

For example, the time information may indicate that the fourth device may be used as a reader when its own service amount is generally less.

For another example, the state information may indicate that the fourth device may be used as a reader when itself has no service data for transmission.

In some embodiments, the first device may be a wireless device without a power supply module, a wireless device with a power supply module that has an extremely low power supply capability, a wireless device with a power supply module that has lost power supply capability, or any wireless device that supports backscatter communication.

In some embodiments, the first device may be any passive device, an ambient energy device, or an ambient IoT device (ambient IoT).

For example, the first device may be the device A, the device B, and/or the device C shown in FIG. 1G.

The second device may be any final node for receiving the first information. That is, the final node is the device corresponding to the receiving address of the first information, that is, the second device is the receiving device of the first information.

The second device may include, but is not limited to, a server or an application function (AF).

For example, the first device is an IoT device, and the second device may be an IoT server.

In some embodiments, the second device may be any network device located within a trust domain of the mobile communication network.

In some embodiments, the second device may be any network device located in a trust domain of the mobile communication network, and the second device may access the mobile communication network through a network open function, or the like.

In some embodiments, the first signal at least triggers the first device to send the first information. That is, in some cases, the first signal may be used as a trigger signal for sending the first information by the first device.

In some embodiments, the first signal is an excitation signal of the first device, and the first signal excites the first device to send the first information.

In some embodiments, the first signal provides energy for sending the first information by the first device. For example, the first device receives the first signal and sends the first information based on the signal energy of the first signal.

In some embodiments, the first information may include data and/or signaling. For example, the first information may include: preset data of the first device, and data and/or signaling written into the first device by the third device. For example, the third device may be a variety of sensors. The preset data here may be any data written into the first device before the first device is put into use.

The first information may be carried by the reflection signal shown in FIG. 1B.

For example, the preset data of the first device includes but is not limited to one of the following:
a device identification of the first device;
device type information of the first device; or
an identification of a target carrying the first device and/or target information. For example, the target carrying the first device may include an object such as an expressage . The preset data of the first device may be an identification of the target, and/or type information of the expressage, origin, destination, and/or security assurance information of the expressage.

In some embodiments, although the first device has no power supply or only has a power supply module with a temporary energy storage or a power supply module with a limited power supply capability, the first device has a storage space, and the first device is used as an external storage device of the third device and may be written into data and/or signaling by the third device. In this way, even if the first device has no pre-configured data, the first information in the first device is dynamically updated.

For example, the third information includes at least one of the following:
capability information, indicating whether the third device supports to be used as a reader of the first device; or
indication information, indicating whether the third device agrees or is expected to be used as a reader of the first device.

In some embodiments, the third information further includes at least one of the following:
proposed time-space information, indicating time information and/or spatial information that the third device agrees or desires to be used as a reader of the first device; or
bandwidth information, indicating radio frequency information used when the third device is used as a reader.

The third information includes at least one of the following:
capability information, indicating whether the fourth device supports to be used as a reader of the first device; or
indication information, indicating whether the fourth device agrees or is expected to be used as a reader of the first device.

In some embodiments, the fourth information further includes at least one of the following:
proposed time-space information, indicating time information and/or spatial information that the fourth device agrees or desires to be used as a reader of the first device; or
bandwidth information, indicating radio frequency information used when the fourth device is used as a reader.

Certainly, the foregoing is merely an example for the third information, and the specific implementation is not limited to the foregoing example.

In some embodiments, the third information may further include:
whether the third device supports to be used as a reader; and/or whether the third device agrees or desires to be used as a reader.

Among them, the reader is configured to send the first signal to the first device and receive the first information returned by the first device.

In some embodiments, the third device forwards or transparently transmits the third information to the core network device.

In some embodiments, the core network device receives the third information from the third device.

The core network device receiving the third information here may include, but is not limited to, an access management function (AMF), etc.

In S2102, fourth information is sent.

In some embodiments, the second device sends the fourth information.

In some embodiments, the second device sends the fourth information to the core network device.

The second device may be a server or an application function.

In some embodiments, the fourth information indicates that the third device is used as a reader of the first device, to indicate to select the third device to send the first signal to the first device and receive the first information from the first device.

In some embodiments, the fourth information indicates that the fourth device is used as a reader of the first device, to indicate to select the fourth device to send the first signal to the first device and receive the first information from the first device.

In some embodiments, the fourth information includes the second information. The second information may be used to indicate the third device to send the first signal to the first device and receive the first information sent by the first device.

In some embodiments, the second information includes at least one of the following:
a task identification, where the task identification identifies a task to be executed by the first device;
task information, where the task information describes the task to be executed;
first indication information, indicating to send the first information to a second device using a first channel, or indicating to send the first information to the second device using a second channel and a third channel; or
address information, pointing to the second device.

The task identification may be an encoded sequence and/or a character string with a unique identification allocated for the second device.

The task identification indicates a task to be executed by the first device, and the task may be related to reporting of the first information of the first device.

The task information may indicate a service type, a service identification of the task to be executed, a data type and/or a data amount of the first information to be uploaded by the first device, or the like.

The address information includes but is not limited to an Internet Protocol (IP) address.

In some embodiments, the address information may further include an IP address and a port number. In some embodiments, the method further includes:
establishing the first channel with the second device according to the address information, where the third device sends a channel establishment request to a specified address according to the specified address in the address information, and the first channel may be established after the second device receives the channel establishment request sent by the second device.

In some embodiments, the task information includes at least one of the following:
configuration information, configuring the third device to send the first signal and/or receive the first information;
time information, indicating a time range for sending the first signal by the third device
area information, indicating an area range for sending the first signal by the third device;
a data reporting type, indicating a type for sending the first information by the first device;
a device identification of a first device, indicating the first device that sends the first information; or
a device group identification of a first device group, indicating a device group including a plurality of first devices that send the first information.

The area information may include, but is not limited to, a cell identification, a base station identification, and/or a tracking area (TA) identification.

In some embodiments, the time information may indicate at least one of:
a time range for sending the first signal by the target terminal;
a start moment and/or an end moment for sending the first signal by the target terminal;
a time interval between two adjacent sending of the first signal by the target terminal;
a duration for sending the first signal by the target terminal for one time.

In some embodiments, the configuration information includes at least one of the following:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

The coverage level may be used by the target terminal to determine a maximum power and/or a minimum power for sending the first signal, and/or a coverage range of the first signal.

In some other embodiments, the task information may further include:
device information, indicating a first device to execute the task corresponding to the task identification. For example, the device information may indicate a type of the device and a function supported by the device;
configuration information, able to indicating the configuration in which the first signal is transmitted and the first information is received wirelessly. For example, the configuration information may relate to a configuration of a radio resource, a power configuration, and/or a transmission mode configuration, or the like;
delay-sensitive information, indicating whether the first information sent by the first device is delay sensitive. If the first information is delay-sensitive information, after receiving the first information from the first device, the third device needs to send the first information to the core network device or the second device in time. If the first information is not delay-sensitive information, the third device may temporarily buffer the first information and wait for a suitable sending occasion to send the first information to the core network device or the second device.

In some cases, if the first device cannot report the first information completely when the third device sends the first signal for one time, it may be implemented by sending the first signal repeatedly for a plurality of times. For example, when the third device determines the sending of the first signal according to the quantity of repetitions, the third device sends the first signal for times equal to the quantity of repetitions.

In some other embodiments, the repetition interval indicates a time interval and/or a frequency domain interval for repeatedly sending the first signal.

In summary, in this configuration information, a behavior of sending the first signal by the third device is standardized, and control of sending the first signal by the third device may be implemented based on the current wireless environment and/or the system capacity, to ensure communication quality.

In some embodiments, the configuration information may further include:
a sending manner, for example, indicating whether to send the first signal by frequency hopping. Sending by frequency hopping includes: sending the first signal by frequency hopping in a slot, and/or sending the first signal by frequency hopping across a slot;
a sending sequence, for example, indicating a sequence carried by the first signal sent by frequency hopping, where the sequence causes that after the first signal is received by a non-first device, the first signal may be ignored; and
indication information, indicating whether the first signal carries second information, for example, indicating whether the first signal carries at least a task identification and/or a device identification of the first device in the second information.

In some embodiments, the task information further includes at least one of the following:
a first correspondence between the task identification and a device identification of the first device;
a second correspondence between the first channel and a device identification of the first device;
a third correspondence between the task identification and the first channel; or
a fourth correspondence between the task identification and the second channel.

The first correspondence to the fourth correspondence here is collectively referred to as a correspondence.

Between the two pieces of information with the correspondence, the index information of the other party can be found with each other.

For example, according to the first correspondence between the task identification and the device identification of the first device, the network device or the terminal device may correspondingly store the task identification and the device identification of the first device. Subsequently, the task identification may be found according to the device identification, and the device identification may also be found according to the task identification.

The second correspondence between the first channel and the device identification of the first device may be represented as that the device identification of the first device and the channel identification of the first channel are correspondingly stored. In this way, the first channel may be determined based on the device identification of the first device, and the device identification of the first device may also be determined based on the first channel.

According to the third correspondence between the task identification and the first channel, the network device and/or the terminal device may correspondingly store the task identification and the channel identification of the first channel. In this way, the first channel may be determined based on the task identification, and the task identification may also be determined based on the first channel.

According to the fourth correspondence between the task identification and the second channel, the network device and/or the terminal device may correspondingly store the task identification and the channel identification of the second channel. In this way, the second channel may be determined according to the task identification, and the task identification may also be determined based on the second channel.

In some embodiments, the core network device receives the fourth information, or the third device receives the fourth information.

In some embodiments, the fourth information further includes at least one of the following:
an Internet protocol (IP) address of a second device; or
first indication information, where the first indication information indicates to send the first information to the second device using the first channel, or indicates to send the first information to the second device using the second channel and the third channel, where the first channel is a transmission channel between the third device and the second device, the second channel is a transmission channel between the third device and the core network device, and the third channel is a transmission channel between the core network device and the second device.

In some embodiments, the fourth information may further indicate one of the following:
second indication information, indicating whether to use the third device as a reader of the first device; or
third indication information, indicating whether to use a network slice or a PDU session to send the first information to the second device.

In S2103, second information is sent.

In some embodiments, the core network device sends the second information based on the fourth information.

In some embodiments, the core network device sends the second information to the third device based on the fourth information.

In some embodiments, the core network device may directly send the second information to the third device based on the fourth information by using NAS signaling. The NAS signaling here is an NAS message.

In some embodiments, the second information is used to indicate that the third device is used as a reader of the first device.

In some embodiments, the core network device sends the second information to the third device through an IoT task setup request message.

In some embodiments, the third device receives the second information.

In some embodiments, the core network device receives the third information based on the NAS signaling, and sends the third information to the third device.

In some embodiments, the core network device sends the third information to the third device through an initial context setup request.

In some embodiments, the third device receives the second information, and sends the feedback information for the second information to the core network device. The feedback information may be optional information, and may be used to indicate that the third device receives the second information. For example, the feedback information may be an acknowledgement character (ACK) or a non-acknowledgement character (NACK).

In some embodiments, the third device receives the second information sent by the core network device.

If the third device that receives the second information considers that the current third device is not suitable as a third device, it may send a reject message to the core network device. After receiving the reject message, the core network device may reselect a third device to be used as a reader of the first device.

In some examples, if the third device that receives the second information considers that the current third device is available as a third device, it may send an accept message to the core network device. After receiving the accept message, the core network device may use the third device as the third device.

In S2104, a first signal is sent.

In some embodiments, the third device sends the first signal to the first device.

In some embodiments, after receiving the second information, the third device sends the first signal based on the second information.

For example, the first signal is sent in a specified time range based on the second information.

For another example, the first signal is sent in a specified direction based on the second information.

In some embodiments, the transmission parameter for sending the first signal is determined based on the second information, where the transmission parameter includes but is not limited to at least one of the following:
a carrier frequency for transmitting the first signal;
a transmission power for the first signal;
a transmission period for the first signal;
a quantity of repetitions for the first signal;
a beam used for the first signal; or
a coverage level of the first signal.

Certainly, the foregoing transmission parameter may be determined based on the second information, or may be determined by the third device based on a current listening of the third device on the wireless environment.

In some other embodiments, the third device sends the first signal to the first device.

In some embodiments, the first device receives the first signal.

In some embodiments, the first signal may be a physical layer signal sent according to a preset sequence, and the physical layer signal may not carry any information content.

In some other embodiments, the first signal may be a signal carrying information content. After receiving the first signal, the first device may extract the information carried on the first signal by decoding the first signal.

In some embodiments, the first signal may carry at least part of content of the second information.

The second information may be used by the third device and/or the auxiliary node to send the first signal, or may be used by the first device to send the first information.

In some embodiments, the first signal may carry at least one of the following information:
a task identification, where the task identification identifies a task to be executed by the first device. For example, the task to be executed may include at least reporting of the first information; or
task information, where the task information describes a task to be executed, for example, describing the corresponding service and task type of the task to be executed, the specific content of the first information that needs to be reported when the first device executes the task, and/or that the first device needs to report all or part of the first information stored in the first device.

In some embodiments, the first signal may carry a device identification of the first device that is to send the first information. In this way, in a case that there are a plurality of first devices, and the plurality of first devices receive the first signal, only the first device with a device identification being carried in the first signal may send the first information based on the excitation of the first signal.

Taking the first device carried on the third device as an example, the task information may indicate the first device to send newly added first information relative to the previous data reporting.

In S2105, the first information is sent based on the first signal.

In some embodiments, the first device sends the first information based on the trigger or the excitation of the first signal.

In some other embodiments, the first device sends the first information based on the signal energy of the first signal.

In some embodiments, the first device sends the first information to the sending device of the first signal based on the first signal.

For example, the first device sends the first information to the third device based on at least part of the signal energy of the first signal.

Here, for related descriptions of the first device and/or the first information, reference may be made to the corresponding descriptions in the foregoing step S2101.

In step S2106, the first information is sent.

In some embodiments, the third device sends the first information to the core network device.

In some other embodiments, the third device sends the first information to the second device.

The third device here may be various types of base stations or the like.

The core network device may be any device in a core network terminal.

For example, the core network device may include, but is not limited to, a user plane function (UPF). The UPF is a user plane network element of a core network, and may be used for data interaction between devices.

In some embodiments, it includes a manner 1: the third device sends the first information to the second device.

In some embodiments, it includes a manner 2: the third device sends the first information to the core network device.

In some embodiments, manner 2 further includes that: the core network device sends the first information to the second device.

The second device may be a target end device that needs to receive the first information.

In some embodiments, the second device may be a server that receives the first information. For example, the second device may be an IoT server.

In some embodiments, the second device may be an application function (AF) deployed in the core network or outside the core network.

In some embodiments, the third device may send the first information based on a protocol data unit (PDU) session.

In some embodiments, the target access network device may send the first information based on a tunnel.

In some embodiments, the target access network device may send the first information based on one or more tunnels.

In some embodiments, the target access network device sends the first information by using a network slice.

In summary, the first information is directly or indirectly forwarded or transparently transmitted to the second device.

In the embodiments of the present disclosure, an intermediate device, such as a target access network device, is used to transmit the first signal, so that the passive device and/or the first device that only can provide a small amount of energy for itself can successfully send the first information, to implement successful communication of the passive device and the first device in which the power supply module cannot be used.

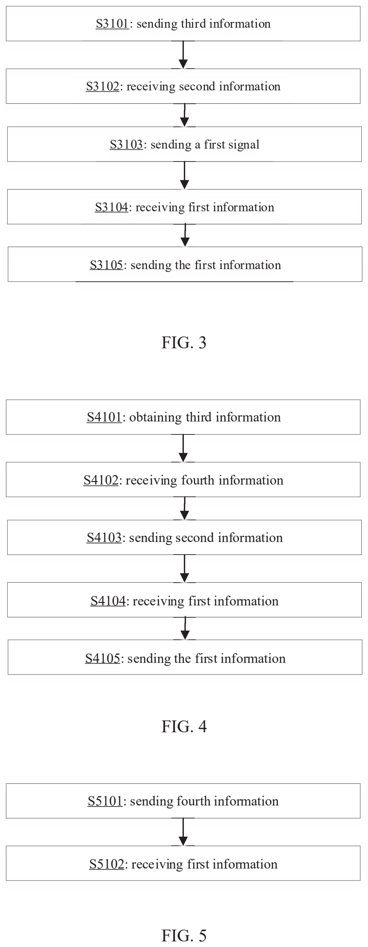

FIG. 3 is a schematic interaction diagram of a communication method according to an embodiment of the present disclosure. As shown in FIG. 3, the embodiment of the present disclosure relates to a communication method applied to a third device, where the method includes the following.

**In** S3101, third information is sent. For the third device here, reference may be made to the third device shown in the embodiment shown in FIG. 2.

The third information may be used by the core network device to select a reader for the first device. The reader may also be referred to as an anchor device or the like. For the information content of the third information here, reference may be made to the embodiment shown in FIG. 2, which is not repeated here.

In S3102, second information is received.

In some embodiments, the third device receives the second information from the core network device.

After receiving the second information, the third device locally stores the second information.

Here, the second information may be used by the third device to send the first signal to the first device and receive the first information returned based on the first signal.

For the information content of the second information, reference may be made to the embodiment shown in FIG. 2, which is not repeated here.

In S3103, the first signal is sent.

In some embodiments, after receiving the second information, the third device enters a preparatory state for wireless communication with the first device, and sends the first signal according to the second information after entering the preparatory state.

In some embodiments, the third device sends, based on the second information, the first signal directionally or non-directionally by using a frequency, a transmit power, and/or a coverage gain indicated by the second information.

The first signal may be used as a trigger signal or an excitation signal for the first device to return the first information. For the related description of the first device here, reference may be made to the embodiment shown in FIG. 2.

In some embodiments, the first signal may carry some or all of the content in the second information. For example, the first information may carry a task identification and/or task information in the second information.

In S3104, the first information is received.

In some embodiments, the first information is the information sent by the first device based on at least part of the signal energy of the first signal. The first information is the information returned based on the backscatter communication mechanism.

In some embodiments, the first information is received based on the resource information indicated by the second information.

In some embodiments, the first information is received on a radio bearer (RB) indicated by the bearer information in the second information.

For specific content of the first information, reference may be made to the embodiment shown in FIG. 2.

In some embodiments, the first information may include a task identification, and/or does not include a task identification.

In some other embodiments, the first information may carry the device identification of the first device.

In some embodiments, the device identification may include a service code. The service code may identify a service type in which the first device participates and/or that the first device can execute a service. Generally, the task identified by the task identification is related to a service identified by a service code in the device identification of the first device. The service type may be determined according to the service code, and different service codes correspond to different service types.

In S3105, the first information is sent.

In some embodiments, the third device sends the first information to the second device and/or the core network device.

In some embodiments, the third device sends the first information based on the second information.

For example, the first device sends the first information to the third device based on the resource information in the second information.

For example, the third device sends the first information to the core network device and/or the second device in a signal radio bearer (SRB) and/or a data radio bearer (DRB) based on the resource information.

For another example, the third device physically sends the first information by using a physical uplink shared channel (PUSCH), a random access channel (RACH), or a physical uplink control channel (PUCCH) indicated by the resource information.

For another example, the third device sends the first information by using a logical channel or a logical channel group indicated by the resource information.

In some embodiments, the third device sends the first information to the core network device.

In some embodiments, the third device sends the first information to the second device.

In some embodiments, the third device sends the first information to the core network device through the second channel, and the second channel may include a tunnel between the core network device and the third device. The tunnel may include, but is not limited to, a GPRS tunneling protocol (GTP) tunnel. GPRS is an abbreviation of General Packet Radio Service. The second channel may also be a Next Generation Application Protocol (NGAP) connection.

Further, the first information is further sent by the core network device to the second device through the third channel. The third channel may include, but is not limited to, an IP channel.

In some other embodiments, the third device sends the first information to the second device through the first channel.

The first channel may be an IP tunnel established based on the IP address of the second device.

For related descriptions of the first information here, reference may be made to the method shown in FIG. 2.

In summary, in the embodiments of the present disclosure, the third device may be used as a reader or an anchor of the first device, so as to successfully send the first information from the first device to the network device.

In the embodiments of the present disclosure, the first device may be excited by means of the third device to send the first information, so that the first device that is passive or has a low energy itself can successfully send the first information to the network side.

In some embodiments, S3101 is an optional step. The selection of the third device may be indicated by the core network or agreed by a protocol or preconfigured.

In some embodiments, some or all of the third information may be pre-subscribed and stored in the UDM and/or the UDR of the core network device. Therefore, the third device subsequently does not need to provide the third information to the network device.

In some embodiments, S3102 is an optional step. The third device may obtain the second information according to a protocol agreement, or send the first signal periodically or non-periodically according to a pre-configuration.

In some embodiments, the communication method includes S3102 to S3105, that is, S3101 is an optional step, and the third device may be pre-configured.

In some other embodiments, the communication method may include S3103, S3104, and S3105, that is, both S3101 and S3102 are optional steps, and any third device may send the first signal.

FIG. 4 is a schematic flowchart of a communication method according to an embodiment of the present disclosure. As shown in FIG. 4, the embodiment of the present disclosure relates to a communication method performed by a core network device, and the method includes the following.

In S4101, third information is obtained.

The core network device may include, but is not limited to, an AMF, a UPF, a PCF, an SMF, or the like.

In some embodiments, the core network device obtains the third information from subscription data stored in the User Data Management (UDM) and/or the Unified Data Repository (UDR).

In some embodiments, the core network device receives the third information from one or more third devices.

In some embodiments, obtaining the third information includes: receiving, from a network management device, the third information sent by the one or more third devices.

In some embodiments, the third information reported by the first device and forwarded by the third device is received.

For related descriptions of the third information here, reference may be made to the instantiation shown in FIG. 2, which is not repeated here.

In S4102, fourth information is received.

In some embodiments, the fourth information sent by the second device is received.

For related descriptions of the fourth information, reference may be made to the embodiment shown in FIG. 2, which is not repeated here.

In S4103, second information is sent.

In some embodiments, after the fourth information is received, the second information is sent to the third device.

In some embodiments, the core network device sends an IoT task setup request to the third device, where the IoT task setup request carries the second information.

In some embodiments, the third information is sent to the third device through an initial context request message.

In some embodiments, the core network device may further send the third information to the third device.

In some embodiments, the core network device may send the second information and/or the third information together to the third device.

For related descriptions of the fourth information and the second information, reference may be made to the embodiment shown in FIG. 2.

In S4104, first information is received.

In some embodiments, the core network device receives the first information from the third device through the second channel.

In S4105, the first information is sent.

In some embodiments, the core network device sends the first information to the second device through the third channel.

In some embodiments, the communication method performed by the core network may include S 4103, and other steps are optional steps or steps that may be omitted. **In** some cases, the core network device pre-stores the fourth information or the fourth information is agreed by a protocol, and the core network device may directly send the second information. The reporting process of the first information may relate to the core network device or not relate to the core network device. For example, the third device may directly send the first information to the second device.

In some embodiments, the communication method performed by the core network may include S4103 and S4104, and other steps are optional steps or steps that may be omitted. For example, when the core network device is the receiving final node of the first information, after receiving the first information, the core network no longer sends the first information to another device.

In some embodiments, the communication method performed by the core network may include S4101, S4102, and S4103. Other steps are optional steps or steps that may be omitted. The second information is sent to the third device, so that the third device sends the first signal to the first device.

In some embodiments, the communication method performed by the core network may include S4102 and S4103. Other steps are optional steps or steps that may be omitted. The second information is sent to the third device, so that the third device sends the first signal to the first device.

In some embodiments, the communication method performed by the core network may include S4101, S4102, S4103, and S4104. Other steps are optional steps or steps that may be omitted. After receiving the first information, the core network device may store the first information locally, so that the first information is sent to the core network device and/or the second device when it is convenient to send the first information.

In some embodiments, the communication method performed by the core network may include S4102, S4103, S4104, and S4105. Other steps are optional steps or steps that may be omitted. The third device may be determined based on the second information, and the third information is no longer received.

FIG. 5 is a schematic flowchart of a communication method according to an embodiment of the present disclosure. As shown in FIG. 5, the embodiment of the present disclosure relates to a communication method performed by a second device, and the method includes the following.

In S5101, fourth information is sent.

The second device may be a server of the first device, or a peer terminal device of the second device.

In some embodiments, the second device sends the fourth information to the core network device.

For related descriptions of the fourth information, reference may be made to the embodiment shown in FIG. 2, which is not repeated here.

In S5102, first information is received.

In some embodiments, the first information sent by the third device through the first channel is received.

In some other embodiments, the first information sent by the core network device through the second channel is received.

For related descriptions of the first information, the second channel, and the third channel here, reference may be made to descriptions of any one of the embodiments corresponding to FIG. 2 to FIG. 4.

In some embodiments, the communication method performed by the second device may include S5102, that is, S5101 is an optional step or a step that may be omitted. The first information sent in different manners may be received. It is no longer limited which device the reader of the first device is, as long as the first information can be received.

In some other embodiments, the communication method performed by the second device may include S5101. That is, S5102 is an optional step or a step that may be omitted, as long as the first information is reported to the core network device.

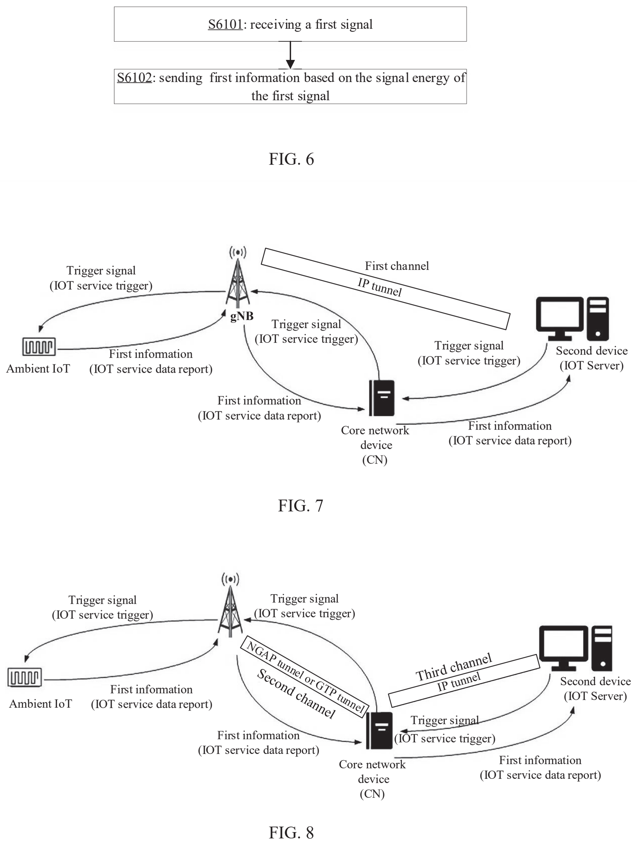

FIG. 6 is a schematic flowchart of a communication method according to an embodiment of the present disclosure. As shown in FIG. 6, the embodiment of the present disclosure relates to a communication method performed by a first device, and the method includes the following.

In S6101, a first signal is received.

For related descriptions of the first device here, reference may be made to the embodiment shown in FIG. 2.

In some embodiments, the first signal sent by the third device is received.

In some embodiments, the first signal broadcasted, multicast, or unicasted by the third device is received.

For related descriptions of the first signal here, reference may be made to the embodiment shown in FIG. 2, which is not repeated here.

In S6102, first information is sent based on the signal energy of the first signal.

In some embodiments, the first information is sent to the third device based on the signal energy of the first signal.

In some embodiments, the first information is sent based on at least part of the energy of the first signal.

In some embodiments, the first information is sent based on the excitation of the first signal.

In some embodiments, the first information is sent based on the trigger of the first signal.

For related descriptions of the first information here, reference may be made to the embodiment shown in FIG. 2, and the specific implementation is not limited to this embodiment.

According to embodiments of the present disclosure, there is provided a communication method performed by a communication system, where the communication system may include a first device and a third device. Specifically, the method may include the following.

The third device may be configured to perform any communication method performed by the third device mentioned in the foregoing technical solution; and the first device may be configured to perform any communication method performed by the first device mentioned in the foregoing technical solution.

In some embodiments, the third device sends the first signal to the first device, where the first signal is at least used to trigger the first device to send the first information.

In some embodiments, the first device receives the first signal, and sends the first information to the third device based on the signal energy of the first signal.

In some embodiments, the third device receives the first information, and sends the first information to a core network device.

In some embodiments, the third device receives second information sent by the core network device, where the second information is used by the third device to send the first signal.

In some embodiments, the communication system further includes a core network device. The core network device may be configured to perform any communication method performed by the core network device mentioned in the foregoing technical solution.

In some embodiments, the core network device receives the first information, and sends the first information to a second device.

In some embodiments, the communication system further includes a second device. The second device may be configured to perform any communication method performed by the second device mentioned in the foregoing technical solution.

In the embodiments of the present disclosure, some or all of the steps or their alternative implementations may be arbitrarily combined with some or all of the steps in other embodiments, or may be arbitrarily combined with alternative implementations of other embodiments.

In the embodiments of the present disclosure, some or all of the steps or their alternative implementations may be arbitrarily combined with some or all of the steps in other embodiments, or may be arbitrarily combined with alternative implementations of other embodiments.

In the Internet of Things network, traditional Internet of Things devices often have a negative impact on user experience due to being driven by traditional batteries with a limited service life. The number of Internet of Things network gradually presents astronomical growth, along with the appearance of a large number of Internet of Things devices, maintenance expenses including labor and battery costs are thus pushed to a completely new level. There are billions of conventional batteries that are discarded each year, and only a small portion can be effectively recovered, which causes deleterious effects on the Earth's ecosystem. Maintaining the operation of the Internet of Things network and replacement of the battery may be very challenging in some extreme environmental conditions. In this regard, no-battery Internet of Things communications have been proposed, which may improve network performance and sustainability, and extend application scenarios. In addition, no-battery communication is more environmentally friendly and safer for children and old people. By removing conventional batteries, device size and cost can be significantly reduced, thus providing basis for various new applications.

In the 5G Era, various Low Power Wide Area (LPWA) technologies have been developed, such as Machine Type Communication (MTC), Narrow Band Internet of Things (NB-IoT), Reduced Capability (RedCap), or the like, to meet the increasing demand in the vertical field. These LPWA technologies implement low cost, low power consumption and large-scale connection, and can meet the requirements of many applications. However, there are still many use cases and applications in which the following cases cannot be addressed. First, traditional battery-driven devices are not applicable, such as under extreme environmental conditions (e.g. high pressure, extremely high/low temperature, humid environments). Second, there is a need for maintenance-free devices (e.g. conventional batteries that do not require replacement of devices). Finally, there is a need for ultra-low complexity, very small device size/form factor (e.g. mm in thickness), longer service life cycle, etc. T

The Internet of Things supporting ambient power is a promising technology to meet the above-mentioned unmet needs. An Internet of Things device supporting ambient power is an Internet of Things device powered by energy harvesting, with no battery or with limited energy storage capability (e.g. by using capacitors), in which power is provided by collecting radio waves, light, motion, heat, or any other suitable power source.

The energy obtained from the environment can drive data transmission and wireless communication of the sensing node. The receiving and transmitting power consumption of the current mainstream low-power consumption Internet of Things communication chip (such as BLE, LoRa, NB-IoT) is in the level of several tens of milliwatts or even hundreds of milliwatts, while the energy obtained by ambient energy acquisition is only in the level of microwatts and cannot drive these types of nodes to work. Therefore, a brand-new wireless communication technology is required, so that the energy consumption of the communication drops below several tens of microwatts or even tens of microwatts. The current manner is to use the backscatter communication technology. Backscatter communication is one of key technologies to construct a green energy saving, low cost, and flexibly deployed future Internet of Things, and is an important means for implementing "Internet of Everything".

Referring to FIG. 1B, backscatter communication is to design a modulation and transmission technology with extremely low power consumption by using the principle of radio frequency signal backscatter. The backscatter communication is earliest proposed by Stockman. Since a part of the radio frequency signal will be reflected when reaching the surface of an object, and the transmitting node may adjust a match between the receiving antenna and the impedance based on the information to be sent, enhance reflection of the incident e radio frequency signal, and modulate the sensing data obtained by itself onto the reflection signal, so as to complete sending of the data. This process is similar to a reflector. Compared with other communication technologies, the backscatter transmission does not require complex radio frequency structures, in which the use of devices such as power amplifiers, high-precision crystal oscillators, diplexers, high-precision filters, or the like is reduced, and does not require complex baseband processing. Therefore, the design of the terminal can be simplified, and the cost of the terminal node can be greatly reduced.

Backscatter communication has been widely used in Radio Frequency Identification (RIFD) systems to form many large-scale commercial cases. The working principle is that a receiver (generally an RFID reader) sends a radio frequency excitation signal to activate a passive node (generally an RFID electronic tag). The electronic tag modulates its own information onto the radio frequency signal by using backscatter communication. The reader receives a reflection signal from the passive electronic tag and performs demodulation to implement information transmission.

Referring to FIG. 1C to FIG. 1G, there are many disadvantages in the current FRID technology, for example, small coverage distance (the radio signal will experience the double path fading of the round trip in the communication process, so the path loss is large, the effective communication distance is short), single channel transmission, a need for strict alignment with the tag, no power control, etc. There is a great improvement space for the RFID technology in terms of communication. It is necessary to combine the 3GPP communication technology to improve the wireless communication performance of the RFID technology in terms of passive Internet of Things.

The data of the terminal is based on the data transmission in the PDU session, and the data of the Internet of Things device based on the ambient energy is mainly based on the ID of the ambient Internet of Things device and/or the sensor data, which are not IP data. Therefore, how to collect data and route the data is a problem that needs to be solved. The data transmission based on the PDU session is not suitable for non-IP packet data transmission and routing. In addition, there are massive IoT devices based on ambient energy, the establishment of the dedicated bearer by each terminal is also a huge challenge for the access network side.

The Internet of Things device provided in the embodiment implements, based on task management, task-based non-IP data transmission and routing, and solves the data collection and routing forwarding for massive IoT devices based on ambient energy. The Internet of Things device has the characteristics of low memory, low processing capability, low power, small data transmission, and massive delivery. The ambient Internet of Things device may be free of maintenance, and has a long service life (for example, more than 10 years).

### Definition of a Task.

The 6G network layer needs to provide a complete task lifecycle management mechanism and task QoS guarantee, as well as task-related multi-node and four-element collaboration (connection, calculation, data, algorithm), for different types and numbers of tasks that will occur in the 6G network. In 6G, a task-centric architecture is mentioned. Therefore, definition of a task for each data trigger and reporting of the passive Internet of Things, is suitable for 6G. Everything is based on a task, rather than based on a certain terminal.

The definition of the task and the ID allocation are completed by the IOT server or the core network CN. Each task is also configured with an IP address, and the IP address is a final node for the routing of ambient IOT reporting data. Each task further has a corresponding task description, for example, an ambient IOT range involved in the task, a reported data type and/or type, and/or a quantity of task triggers, valid identification information that identifies the task, or the like.

Solution 1. The base station node is used as a forwarding node, and reference may be made to FIG. 7.
1) An IOT server issues a task, and generates a task ID and a task-related parameter, for example, information that describes a task purpose, a data type, a target ambient IOT, etc. Optionally, the IOT server further configures an IP address for the task, where the IP address is used by a data routing final node for the ambient IOT reporting data. Optionally, the task information further includes an area range for issuing the task, and the task area range may be a cell list, a base station ID list, or the like. Optionally, the task information further includes a start time and/or an end time of the task. Optionally, the task information further includes a correspondence between a task ID and an ambient ID or a part of the ambient IOT ID.
2) The IOT server sends the generated task and task-related information to the core network CN. The core network CN is configured to determine the target base station information and forward the task to the corresponding base station according to the task area information preconfigured by the operation administration and maintenance (OAM) device or the task area information sent by the IOT server.
3) The base station saves the task information, determines a target cell list of the task, and issues a task in the cell.

Option 1. The task information or the data request message issued by the base station to the ambient IOT includes the task ID, and/or the data reporting type or category, and/or identification information of the target ambient IOT or a set of target ambient IOTs.

Option 2. The task information or the data request message issued by the base station to the ambient IOT includes the data reporting type or type, and/or identification information of the target ambient IOT or a set of target ambient IOTs.

4) The base station receives the data reported from the ambient IOT.

Option 1. The data reported by the ambient IOT includes task ID information. The base station matches the IP address according to the task ID, and forwards the received data to the target IP address.

Option 2. The data reported by the ambient IOT does not include task ID information, but includes the ambient IOT ID information. The base station matches the task ID through the ambient IOT ID or partial information in the ambient IOT ID, matches the IP address according to the task ID, or directly matches the IP address, and then forwards the received data to the target IP address.

Solution 2. The core network node is used as a forwarding node, and reference may be made to FIG. 8.
1) An IOT server issues a task, and generates a task ID and a task-related parameter, for example, information that describes a task purpose, a data type, a target ambient IOT, etc. Optionally, the IOT server further configures an IP address for the task, where the IP address is used by a data routing final node for the ambient IOT reporting data. Optionally, the task information further includes an area range for issuing the task, and the task area range may be a cell list, a base station ID list, or the like. Optionally, the task information further includes a start time and/or an end time of the task. Optionally, the task information further includes a correspondence between a task ID and an ambient ID or a part of the ambient IOT ID.
2) The IOT server sends the generated task and task-related information to the core network CN. The core network CN is configured to determine the target base station information based on the task area information preconfigured by the OAM or the task area information sent by the IOT server, and forward the task to the corresponding base station. At the same time, the CN establishes, to the target base station, a GTP tunnel or an NGAP signaling connection for the task. The CN saves the task ID and the IP address, or the GTP tunnel and the IP address, or the mapping relationship between the NGAP signaling connection and the IP address.
3) The base station saves the task information, determines a target cell list of the task. and issues a task in the cell. The base station saves the mapping relationship between the task ID and the GTP tunnel, or the mapping relationship between the NGAP signaling connection and the task ID, the mapping relationship between an Ambient IOT id or a partial ambient IOT ID and a task ID, or a correspondence between an ambient IOT ID or a partial ambient IOT ID and a GTP tunnel/NGAP signaling connection.

Option 1. The task information or the data request message issued by the base station to the ambient IOT includes the task ID, and/or the data reporting type or category, and/or identification information of the target ambient IOT or a set of target ambient IOTs.

Option 2. The task information or the data request message issued by the base station to the ambient IOT includes the data reporting type or category, and/or identification information of the target ambient IOT or a set of target ambient IOTs.

### 4) The base station receives the data reported from the ambient IOT.

Option 1. The data reported by the ambient IOT includes task ID information. The base station matches the GTP tunnel or the NGAP signaling connection based on the task ID, and forwards the data to the CN through the GTP tunnel or the NGAP signaling connection.

Option 2. The data reported by the ambient IOT does not include task ID information, but includes ambient IOT ID information. The base station matches the task ID through the ambient IOT ID or partial information in the ambient IOT ID, matches the GTP tunnel or the NGAP signaling connection according to the task ID, or directly matches the GTP tunnel or the NGAP signaling connection, and then forwards the received data to the CN through the GTP tunnel or the NGAP signaling connection.

5) The CN matches the IP address based on the data received through the CTP tunnel or the NGAP signaling, and sends the data to the target node.

The Internet of Things device provided in the embodiment needs to collect radio waves sent by the network node to obtain energy, and then, may drive itself to work. Therefore, before the energy is obtained, the Internet of Things device is usually in a "off" state, i.e. an offline state. To this end, the communication system needs to support shorter transmission duration, lower memory consumption, and more convenient data communication manners managed by the terminal, to complete the data communication process as soon as possible. In the present invention, by defining the task and defining the routing and forwarding of data performed based on the IP address, the GTP tunnel or NGAP signaling connection for the task, data collection of the ambient IOT is implemented.

An embodiment of the present disclosure further provides an apparatus for implementing any one of the above methods. For example, an apparatus is provided, where the apparatus includes units or modules configured to implement various steps performed by a terminal in any one of the foregoing methods. For another example, another apparatus is further provided, including units or modules configured to implement various steps performed by a network device (for example, a third device or a core network device) in any one of the foregoing methods.

It should be understood that division of units or modules in the foregoing apparatus is merely a division of logical functions. In actual implementation, all or some of the units may be integrated into one physical entity, or may be physically separated. In addition, the units or modules in the apparatus may be implemented in the form of software invoked by a processor. For example, the apparatus includes a processor, the processor is connected to the memory, the memory stores instructions, and the processor invokes the instructions stored in the memory to implement any one of the above methods or implement the functions of the units or modules of the foregoing apparatus. Among them, the processor is, for example, a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and functions of some or all of the units or modules may be implemented by designing hardware circuits, and the foregoing hardware circuits may be understood as one or more processors. For example, in an implementation, the hardware circuit is an application-specific integrated circuit (ASIC), and functions of some or all of the units or modules are implemented by designing a logical relationship of elements in the circuit. For another example, in another implementation, the hardware circuit may be implemented by a programmable logic device (PLD). Taking the field programmable gate array (FPGA) as an example, the hardware circuit may include a large number of logic gate circuits, and functions of some or all of the units or modules may be implemented by configuring a connection relationship between the logic gate circuits using a configuration file. All units or modules of the foregoing apparatus may be implemented in a form of software invoked by a processor, or all implemented in a form of a hardware circuit, or partially implemented in a form of software invoked by a processor and the remaining part implemented in a form of a hardware circuit.

In the embodiments of the present disclosure, the processor is a circuit with signal processing capability. In an implementation, the processor may be a circuit with an instruction reading and running capability, for example, a central processing unit (CPU), a microprocessor, a graphics processing unit (GPU) (which may be understood as a microprocessor), a digital signal processor (DSP), or the like. In another implementation, the processor may implement a certain function by using a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the processor loads a configuration document to implement the configuration process of the hardware circuit, which may be understood as a process in which the processor loads an instruction to implement the functions of some or all of the units or modules. In addition, the processor may also a hardware circuit designed for artificial intelligence, which may be understood as an ASIC, such as a neural network processing unit (NPU), a tensor processing unit (TPU), a deep learning processing unit (DPU), or the like.

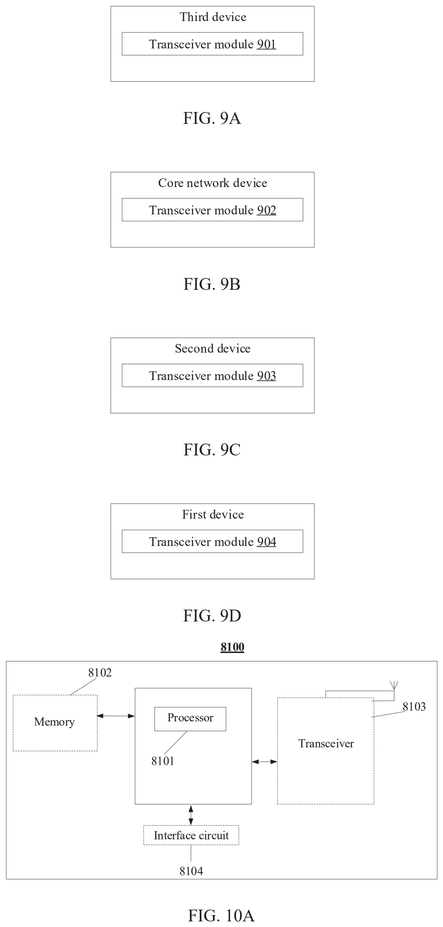

FIG. 9A is a schematic structural diagram of a third device according to an embodiment of the present disclosure. As shown in FIG. 9A, the third device includes a transceiver module 901.

The transceiver module 901 is configured to: send a first signal by the third device, where the first signal is at least used to trigger a first device to send first information; receive the first information sent by the first device based on the first signal; and, send the first information.

The transceiver module 901 may correspond to a specific structure such as an antenna or a network interface of the target terminal.

Optionally, the target terminal further includes a storage module and/or a processing module, and the storage module may be configured to store information, for example, to store the first information. The processing module may be configured to perform information processing, for example, to control transmission of the first signal and/or transceiving of the first information.

Optionally, the transceiver module 901 is further configured to: send the first information to the second device through a first channel between the third device and the second device; or, send the first information to a core network device through a second channel between the third device and the core network device, where the core network device is configured to send the first information to the second device through a third channel, and the third channel is a transmission channel between the core network device and the second device.

Optionally, the transceiver module 901 is further configured to receive second information sent by the core network device, where the second information indicates at least that the third device is used as a reader of the first device, and the reader is configured to send the first signal to the first device and receive the first information sent by the first device.

Optionally, the second information includes at least one of the following:
a task identification, where the task identification identifies a task to be executed by the first device;
task information, where the task information describes the task to be executed;
first indication information, indicating to send the first information to the second device using a first channel, or indicating to send the first information to the second device using a second channel and a third channel; or
address information, pointing to a second device.

Optionally, the task information includes at least one of the following:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of a first device, indicating the first device that sends the first information; or
a device group identification of a first device group, indicating a device group including a plurality of first devices that send the first information.

Optionally, the configuration information includes at least one of the following:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

Optionally, the area information includes a cell identification and/or a base station identification.

Optionally, the task information further includes at least one of the following:
a first correspondence between the task identification and a device identification of the first device;
a second correspondence between the first channel and a device identification of the first device;
a third correspondence between the task identification and the first channel; or
a fourth correspondence between the task identification and the second channel.

Optionally, the transceiver module 901 is further configured to send, by the third device, the first signal carrying at least the task identification.

Optionally, the first information carries the task identification.

Optionally, the first information includes a device identification of the first device.

Optionally, the device identification includes a service code, and the service code indicates a service type in which the first device participates.

Optionally, the transceiver module 901 is further configured to send third information to a core network device, where the third information is used by the core network device to determine the third device used as a reader of the first device.

Optionally, the third information indicates at least one of the following:
whether the third device supports being used as a reader; or
whether the third device agrees or desires to be used as a reader.

Optionally, the transceiver module 901 is further configured to establish a first channel with the second device based on the address information.

FIG. 9B is a schematic structural diagram of a core network device according to an embodiment of the present disclosure. As shown in FIG. 9B, the core network device includes a transceiver module 902.

The transceiver module 902 is configured to: receive fourth information from a second device, where the fourth information indicates that a third device is used as a reader of the first device; and, send second information to the third device, where the second information indicates at least the third device is used as a reader of the first device, and the reader is configured to send a first signal to the first terminal and receive the first information sent by the first device.

Optionally, the second information further includes at least one of the following:
a task identification, where the task identification identifies a task to be executed by the first device;
task information, where the task information describes the task to be executed;
first indication information, indicating to send the first information to the second device using a first channel, or indicating to send the first information to the second device using a second channel and a third channel, where, the first channel is a transmission channel between the third device and the second device, the second channel is a transmission channel between the third device and the core network device, and the third channel is a transmission channel between the core network device and the second device; or
address information, pointing to the second device.

Optionally, the fourth information further includes:
second indication information, indicating whether to use the third device as the reader of the first device.

Optionally, the task information includes at least one of the following:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of a first device, indicating the first device that sends the first information; or
a device group identification of the first device group, indicating a device group including a plurality of first devices that send the first information.

Optionally, the configuration information includes at least one of the following:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

Optionally, the task information further includes at least one of the following:
a first correspondence between the task identification and a device identification of the first device;
a second correspondence between the first channel and a device identification of the first device;
a third correspondence between the task identification and the first channel; or
a fourth correspondence between the task identification and the second channel.

Optionally, the transceiver module 902 is configured to: receive the first information from the third device based on a second channel; and
send the first information to the second device based on a third channel.

Optionally, the transceiver module 902 is configured to: obtain third information; and determine, according to the third information, the third device used as the reader of the first device.

Optionally, the transceiver module 902 is configured to receive the third information from one or more third devices.

Optionally, the transceiver module 902 is configured to receive, from a network management device, the third information sent by the one or more third devices.

FIG. 9C is a schematic structural diagram of a second device according to an embodiment of the present disclosure. As shown in FIG. 9 C, the second device includes a transceiver module 903.

The transceiver module 903 is configured to send fourth information to a core network device, where the fourth information includes second information, and the second information indicates at least the third device to send a first signal to a first device and receive first information sent by the first device.

Optionally, the second information includes at least one of the following:
a task identification, where the task identification identifies a task to be executed by the first device; and
task information, where the task information describes the task to be executed;
first indication information, indicating to send the first information to the second device using a first channel, or indicating to send the first information to the second device using a second channel and a third channel, where the first channel is a transmission channel between the third device and the second device, the second channel is a transmission channel between the third device and the core network device, and the third channel is a transmission channel between the core network device and the second device; or
address information, pointing to the second device.

Optionally, the task information includes at least one of the following:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of a first device, indicating the first device that sends the first information; or
a device group identification of the first device group, indicating a device group including a plurality of first devices that send the first information.

Optionally, the configuration information includes at least one of the following:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

Optionally, the task information further includes at least one of the following:
a first correspondence between the task identification and a device identification of the first device;
a second correspondence between the first channel and a device identification of the first device;
a third correspondence between the task identification and the first channel; or
a fourth correspondence between the task identification and the second channel.

Optionally, the fourth information further includes:
second indication information, indicating whether to use the third device as a reader of the first device.

The transceiver module 903 is configured to: receive the first information based on the first channel; or, receive the first information based on the third channel.

FIG. 9D is a schematic structural diagram of a first device according to an embodiment of the present disclosure. As shown in FIG. 9D, the first device includes a transceiver module 904.

The transceiver module 904 is configured to: receive a first signal sent by a third device; and, send first information to the third device based on signal energy of the first signal.

Optionally, the first signal carries at least one of the following:
a task identification, where the task identification identifies a task to be executed of the first device; or
task information, where the task information describes the task to be executed.

Optionally, the transceiver module 904 is configured to: send the first information including the task identification to the third device based on the signal energy of the first signal; or, send the first information including the device identification to the third device based on the signal energy of the first signal, where the device identification is used for the first device.

Optionally, the device identification includes a service code, and the service code indicates a service type in which the first device participates.

As shown in FIG. 1A, an embodiment of the present disclosure provides a communication system, including a first device and a third device.

The first device is configured to receive a first signal, and send first information to a target terminal based on signal energy of the first signal.

The third device is configured to receive the first information from the first device, where the first information is sent by the first device, triggered by the first signal, to the target terminal.

Optionally, the system further includes a second device.

The third device is further configured to send the first information to the second device through a first channel, where the first channel is a transmission channel between the third device and the second device.

Optionally, the system further includes a second device and a core network device.

The third device is further configured to send the first information to the core network device through a second channel, where the second channel is a transmission channel between the third device and the core network device; and

The core network device is configured to send the first information to the second device through the third channel, where the second channel is a transmission channel between the core network device and the second device.

In the embodiments of the present disclosure, for the steps performed by the third device, reference may be made to any one of the foregoing solutions performed by the third device.

In the embodiments of the present disclosure, for the steps performed by the core network device, reference may be made to any one of the foregoing solutions performed by core network device.

In the embodiments of the present disclosure, for the steps performed by the first device, reference may be made to any one of the foregoing solutions performed by the first device.

In the embodiments of the present disclosure, for the steps performed by the second device, reference may be made to any one of the foregoing solutions performed by the second device.

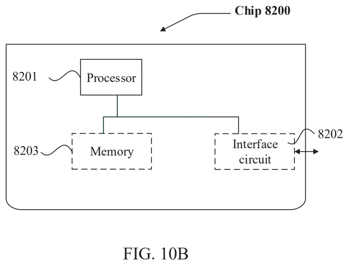

In some embodiments, as shown in FIG. 10A and/or FIG. 10B, the communication device 8100 further includes one or more memories 8102 for storing instructions. Optionally, all or some of the memories 8102 may also be outside the communication device 8100. FIG. 10A is a schematic structural diagram of a communication device 8100 according to an embodiment of the present disclosure. The communication device 8100 may be a network device (for example, a third device or a core network device), or may be a terminal (for example, user equipment), or may be a chip, a chip system, or a processor that supports a network device to implement any one of the foregoing methods, or may be a chip, a chip system, a processor, or the like that supports a terminal to implement any one of the communication methods. The communication device 8100 may be configured to implement the communication method described in the foregoing method embodiments. For details, reference may be made to descriptions in the foregoing method embodiments.

As shown in FIG. 10A, the communication device 8100 includes one or more processor 8101. The processor 8101 may be a general-purpose processor or a special-purpose processor, etc., for example, may be a baseband processor or a central processing unit. The baseband processor may be configured to process a communication protocol and communication data, and the central processing unit may be configured to control a communication apparatus (for example, a base station, a baseband chip, a terminal device, a terminal device chip, a DU, or a CU), execute a program, and process data of a program. The processor 8101 is configured to invoke an instruction to cause the communication device 8100 to perform any one of the foregoing communication methods.

In some embodiments, the communication device 8100 further includes one or more memories 8102 for storing instructions. Optionally, all or part of the memories 8102 may also be outside the communication device 8100.

In some embodiments, the communication device 8100 further includes one or more transceivers 8103. When the communication device 8100 includes one or more transceivers 8103, the communication steps such as receiving and sending steps in the foregoing methods are executed by the transceiver 8103, and the other steps are performed by the processor 8101.

In some embodiments, the transceiver may include a receiver and a transmitter, which may be separate or integrated together. Optionally, terms such as a transceiver, a transceiver unit, a transceiver machine, and a transceiver circuit may be replaced with each other. Terms such as a transmitter, a transmitter unit, a transmitter machine, and a transmitter circuit may be replaced with each other. Terms such as a receiver, a receiver unit, a receiver machine, and a receiver circuit may be replaced with each other.

Optionally, the communication device 8100 further includes one or more interface circuits 8104 connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the foregoing embodiments may be a network device or a terminal, but the scope of the communication device 8100 described in the present disclosure is not limited to this. The structure of the communication device 8100 may not be limited by FIG. 8 a. The communication device may be a standalone device or may be part of a larger device. For example, the communication device may be: (1) an independent integrated circuit IC, a chip, or a chip system or a subsystem; (2) a set with one or more ICs, optionally, the IC set may also include a storage component configured to store data and a program; (3) an ASIC, for example, a modem; (4) a module that may be embedded in another device; (5) a receiver, a terminal device, an intelligent terminal device, a cellular phone, a wireless device, a handset, a mobile unit, a vehicle-mounted device, a network device, a cloud device, an artificial intelligence device, etc.; (6) another device, etc.

FIG. 10B is a schematic structural diagram of a chip 8200 according to an embodiment of the present disclosure. For a case in which the communication device 8100 may be a chip or a chip system, reference may be made to the schematic structural diagram of the chip 8200 shown in FIG. 8b, but is not limited to this.

The chip 8200 includes one or more processors 8201, and the processor 8201 is configured to invoke instructions to cause the chip 8200 to perform any one of the above communication methods.

In some embodiments, the chip 8 0 further includes one or more interface circuits 8202, the interface circuit 8202 is connected to the memory 8203, the interface circuit 8202 may be used to receive signals from the memory 8203 or other devices, and the interface circuit 8202 may be used to send signals to the memory 8203 or other devices. For example, the interface circuit 8202 may read the instructions stored in the memory 8203 and send the instructions to the processor 8201. Optionally, terms such as an interface circuit, an interface, a transceiver pin, a transceiver, or the like, may be replaced with each other.

In some embodiments, the chip 8200 further includes one or more memories 8203 for storing instructions. Optionally, all or part of the memories 8203 may be outside the chip 8200.

The present disclosure further provides a storage medium, where the storage medium stores instructions. When the instructions run on the communication device 8100, the communication device 8100 is enabled to perform any one of the above methods. Optionally, the storage medium is an electronic storage medium. Optionally, the storage medium is a computer-readable storage medium, but may also be a storage medium readable by another apparatus. Optionally, the storage medium may be a non-transitory storage medium, but may also be a transitory storage medium.

The present disclosure further provides a program product. When the program product is executed by the communication device 8100, the communication device 8100 is caused to perform any one of the above communication methods. Optionally, the program product is a computer program product.

The present disclosure further provides a computer program. When the computer program runs on a computer, the computer is caused to perform any one of the above communication methods.

Other embodiments of the present invention will be apparent to those skilled in the art from consideration of the specification and practice of the invention disclosed here. The present disclosure is intended to cover any variations, uses, or adaptations of the present disclosure following the general principles of the present disclosure and including common general knowledge or conventional technical means in the art that are not disclosed in the present disclosure. It is intended that the specification and examples should be considered as examples only, with a true scope and spirit of the present invention being indicated by the following claims.

It should be understood that the present invention is not limited to the precise structures described above and shown in the accompanying drawings, and various modifications and changes may be made without departing from the scope of the present invention. The scope of the present invention is only limited by the appended claims.

## Claims

1. A communication method, comprising:
sending, by a third device, a first signal, wherein the first signal is at least used to trigger a first device to send first information;
receiving the first information sent by the first device based on the first signal; and
sending the first information.

2. The method according to claim 1, wherein sending the first information comprises:
sending the first information to a second device through a first channel between the third device and the second device;
or,
sending the first information to a core network device through a second channel between the third device and the core network device, wherein the core network device is configured to send the first information to the second device through a third channel, and the third channel is a transmission channel between the core network device and the second device.

3. The method according to claim 1 or 2, wherein the method further comprises:
receiving second information sent by a core network device, wherein the second information indicates at least that the third device is used as a reader of the first device, and the reader is configured to send the first signal to the first device and receive the first information sent by the first device.

4. The method according to claim 3, wherein the second information comprises at least one of:
a task identification, wherein the task identification identifies a task to be executed by the first device;
task information, wherein the task information describes the task to be executed;
first indication information, indicating to send the first information to a second device using a first channel, or indicating to send the first information to the second device using a second channel and a third channel; or
address information, pointing to a second device.

5. The method according to claim 4, wherein the task information comprises at least one of:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of the first device, indicating the first device that sends the first information; or
a device group identification of a first device group, indicating a device group comprising a plurality of first devices that send the first information.

6. The method according to claim 5, wherein the configuration information comprises at least one of:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

7. The method according to claim 5, wherein the area information comprises a cell identification and/or a base station identification.

8. The method according to claim 4, wherein the task information further comprises at least one of:
a first correspondence between the task identification and a device identification of the first device;
a second correspondence between the first channel and a device identification of the first device;
a third correspondence between the task identification and the first channel; or
a fourth correspondence between the task identification and the second channel.

9. The method according to claim 4, wherein sending the first signal comprises:
sending, by the third device, the first signal carrying at least the task identification.

10. The method according to claim 4, wherein the first information carries the task identification.

11. The method according to any one of claims 1 to 10, wherein the first information comprises a device identification of the first device.

12. The method according to claim 5, wherein the device identification comprises a service code, and the service code indicates a service type in which the first device participates.

13. The method according to claim 1, wherein the method further comprises:
sending third information to a core network device, wherein the third information is used by the core network device to determine the third device used as the reader of the first device.

14. The method according to claim 13, wherein the third information indicates at least one of:
whether the third device supports being used as the reader; or
whether the third device agrees or desires to be used as the reader.

15. The method according to claim 4, wherein the method comprises:
establishing the first channel with the second device based on the address information.

16. A communication method, comprising:
receiving fourth information from a second device, wherein the fourth information indicates that a third device is used as a reader of a first device; and
sending second information to the third device, wherein the second information indicates at least that the third device is used as the reader of the first device, and the reader is configured to send a first signal to the first terminal and receive first information sent by the first device.

17. The method according to claim 16, wherein the second information further comprises at least one of:
a task identification, wherein the task identification identifies a task to be executed by the first device;
task information, wherein the task information describes the task to be executed;
first indication information, indicating to send the first information to the second device using a first channel, or indicating to send the first information to the second device using a second channel and a third channel, wherein the first channel is a transmission channel between the third device and the second device, the second channel is a transmission channel between the third device and a core network device, and the third channel is a transmission channel between the core network device and the second device; or
address information, pointing to the second device.

18. The method according to claim 16, wherein the fourth information further comprises:
second indication information, indicating whether to use the third device as the reader of the first device.

19. The method according to claim 16 or 17, wherein the task information comprises at least one of:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of the first device, indicating the first device that sends the first information; or
a device group identification of a first device group, indicating a device group comprising a plurality of first devices that send the first information.

20. The method according to claim 19, wherein the configuration information comprises at least one of:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

21. The method according to claim 19, wherein the task information further comprises at least one of:
a first correspondence between the task identification and the device identification of the first device;
a second correspondence between the first channel and the device identification of the first device;
a third correspondence between the task identification and the first channel; or
a fourth correspondence between the task identification and the second channel.

22. The method according to any one of claims 14 to 16, wherein the method further comprises:
receiving the first information from the third device based on a second channel; and
sending the first information to the second device based on a third channel.

23. The method according to claim 16, wherein the method further comprises:
obtaining third information; and
determining, according to the third information, the third device used as the reader of the first device.

24. The method according to claim 23, wherein obtaining the third information comprises:
receiving the third information from one or more third devices.

25. The method according to claim 23, wherein obtaining the third information comprises:
receiving, from a network management device, the third information sent by one or more third devices.

26. A communication method, comprising:
sending fourth information to a core network device, wherein the fourth information comprises second information, and the second information indicates at least a third device to send a first signal to a first device and receive first information sent by the first device.

27. The method according to claim 26, wherein the second information comprises at least one of:
a task identification, wherein the task identification identifies a task to be executed by the first device;
task information, wherein the task information describes the task to be executed;
first indication information, indicating to send the first information to a second device using a first channel, or indicating to send the first information to the second device using a second channel and a third channel, wherein the first channel is a transmission channel between the third device and the second device, the second channel is a transmission channel between the third device and the core network device, and the third channel is a transmission channel between the core network device and the second device; or
address information, pointing to the second device.

28. The method according to claim 26 or 27, wherein the task information comprises at least one of:
configuration information, configuring the third device to send the first signal and/or receive the first information;
time information, indicating a time range for sending the first signal by the third device;
area information, indicating an area range for sending the first signal by the third device;
a data reporting type, indicating a type for sending the first information by the first device;
a device identification of the first device, indicating the first device that sends the first information; or
a device group identification of a first device group, indicating a device group comprising a plurality of first devices that send the first information.

29. The method according to claim 28, wherein the configuration information comprises at least one of:
resource information, configuring a time domain resource and/or a frequency domain resource for sending the first signal and/or receiving the first information by the third device;
coverage information, indicating a coverage level and/or a minimum transmission power for sending the first signal by the third device;
a quantity of repetitions, indicating a maximum quantity of repetitions for sending the first signal by the third device; or
a repetition interval, indicating a time interval between two adjacent sending of the first signal by the third device.

30. The method according to claim 27, wherein the task information further comprises at least one of:
a first correspondence between the task identification and a device identification of the first device;
a second correspondence between the first channel and a device identification of the first device;
a third correspondence between the task identification and the first channel; or
a fourth correspondence between the task identification and the second channel.

31. The method according to claim 26, wherein the fourth information further comprises:
second indication information, indicating whether to use the third device as a reader of the first device.

32. The method according to claim 27, wherein the method further comprises:
receiving the first information based on the first channel;
or,
receiving the first information based on the third channel.

33. A communication method, comprising:
receiving a first signal sent by a third device; and
sending first information to the third device based on signal energy of the first signal.

34. The method according to claim 33, wherein the first signal carries at least one of:
a task identification, wherein the task identification identifies a task to be executed by the first device; or
task information, wherein the task information describes the task to be executed.

35. The method according to claim 33 or 34, wherein sending the first information to the third device based on the signal energy of the first signal comprises:
sending the first information comprising a task identification to the third device based on the signal energy of the first signal;
or,
sending the first information comprising a device identification to the third device based on the signal energy of the first signal, wherein the device identification is used for the first device.

36. The method according to claim 33, wherein the device identification comprises a service code, and the service code indicates a service type in which the first device participates.

37. A communication method, comprising:
sending, by a third device, a first signal to a first device, wherein the first signal is at least used to trigger the first device to send first information;
receiving, by the first device, the first signal, and sending the first information to the third device based on signal energy of the first signal;
receiving, by the third device, the first information, and sending the first information to a core network device; and
receiving, by the core network device, the first information, and sending the first information to a second device.

38. The method according to claim 37, wherein the method further comprises:
receiving, by the third device, second information sent by the core network device, wherein the second information is used by the third device to send the first signal.

39. The method according to claim 37 or 38, wherein the method further comprises:
before sending the second information to the third device, sending, the third device, third information to the core network device, wherein the third information is used by the core network device to determine the third device used as a reader of the first device, and the reader is configured to send the first signal to the first device and receive the first information returned by the first device.

40. A third device, comprising:
a transceiver module, configured to: send a first signal, wherein the first signal is at least used to trigger a first device to send first information; receive the first information sent by the first device based on the first signal; and, send the first information.

41. A core network device, comprising:
a transceiver module, configured to: receive fourth information from a second device, wherein the fourth information indicates that a third device is used as a reader of a first device; and, send second information to the third device, wherein the second information indicates at least that the third device is used as the reader of the first device, and the reader is configured to send a first signal to the first terminal and receive first information sent by the first device.

42. A second device, comprising:
a transceiver module, configured to send fourth information to a core network device, wherein the fourth information comprises second information, and the second information indicates at least a third device to send a first signal to a first terminal and receive first information sent by the first device.

43. A first device, comprising:
a transceiver module, configured to: receive a first signal sent by a third device; and, send first information to the third device based on signal energy of the first signal.

44. A communication system, wherein the information indication system comprises a third device, a core network device, a first device, and a second device, the third device is configured to implement the method according to any one of claims 1 to 15, the core network device is configured to implement the method according to any one of claims 16 to 25, the second device is configured to implement the method according to any one of claims 26 to 32, and the first device is configured to perform the method according to any one of claims 33 to 36.

45. A communication device, wherein the communication device comprises:
one or more processors;
wherein the processors are configured to invoke instructions to cause the communication device to perform the communication method according to any one of claims 1 to 15, claims 16 to 25, claims 26 to 32, claims 33 to 36, and claims 37 to 39.

46. A storage medium, wherein the storage medium stores an instruction that, when runs on a communication device, causes the communication device to perform the communication method according to any one of claims 1 to 15, claims 16 to 25, claims 26 to 32, claims 33 to 36, and claims 37 to 39.
